# EUROPÄISCHE PATENTSCHRIFT

(11) **EP 2 679 350 B1**
(45) Veröffentlichungstag und Bekanntmachung des Hinweises auf die Patenterteilung: **11.09.2019**
(21) Anmeldenummer: 13003102.4
(22) Anmeldetag: 18.06.2013
(51) Int. Cl.: B25J 9/16

(54) **Vorrichtung zum automatisierten Erfassen und Entnehmen von Werkstücken**
Device for the automatic detection and removal of workpieces
Dispositif de saisie et de prélèvement automatisés de pièces

(30) Priorität: 29.06.2012 DE 102012013031
(43) Veröffentlichungstag der Anmeldung: 01.01.2014
(73) Patentinhaber: LIEBHERR-VERZAHNTECHNIK GmbH, 87437 Kempten (DE)
(72) Erfinder: Mattern, Thomas, 87669 Rieden (DE); Hänschke, David, 87452 Altusried (DE); Riedmiller, Bernhard, 87497 Wertach (DE); Mundt, Alois, 87435 Kempten (DE)
(74) Vertreter: Laufhütte, Dieter

(56) Entgegenhaltungen:
- DE-A1-102007 026 956
- US-A1- 2004 080 294
- US-A1- 2008 253 612

## Beschreibung

Die vorliegende Erfindung betrifft eine Vorrichtung zum automatisierten Erfassen und Entnehmen von Werkstücken, mit einer Objekterkennungseinrichtung zum Erfassen der Werkstücke und einem Greifer zum Greifen der Werkstücke, und einer Steuerung zur Auswertung der Daten der Objekterkennungseinrichtung, zur Bahnplanung und zur Ansteuerung des Greifers.

Bei solchen Vorrichtungen ist die Objekterkennungseinrichtung üblicherweise oberhalb der zu greifenden Werkstücke angeordnet, um eine genaue Erfassung der Position der zu greifenden Werkstücke zu ermöglichen. Allerdings muss in diesem Bereich auch der Greifer zum Greifen der Werkstücke arbeiten.

Daher wird die Objekterkennungseinrichtung teilweise am Greifer selbst angeordnet, so dass die Objekterkennungseinrichtung mit dem Greifer mitbewegt wird. Eine solche Ausgestaltung ist aus der US 2004/0080294 A1 bekannt. Die Objekterkennungseinrichtung ist dabei über einen Zylinder an einem Roboterarm des Greifers angeordnet und über diesen von einer Messposition in eine Ruheposition verfahrbar. Allerdings wird durch die Anordnung der Objekterkennungseinrichtung teilweise am Greifer die Auswertung der Daten erheblich erschwert. Zudem ergeben sich Probleme im Hinblick auf die Stabilität der Anordnung, da der Sensor hierdurch leicht mit Störkanten kollidieren kann.

Aus der US 2008 / 0253612 A1 und der DE 10 2007 026 956 A1 sind jeweils Vorrichtungen mit einem Laser-Linienscanner bekannt, welcher an einer Verfahranordnung angeordnet ist. Durch Verfahren des Laser-Linienscanners überstreicht bei dieser Anordnung die Laserlinie den Messbereich.

Aufgabe der vorliegenden Erfindung ist es, eine Vorrichtung zum automatisierten Erfassen und Entnehmen von Werkstücken zur Verfügung zu stellen, deren Objekterkennungseinrichtung eine hohe Genauigkeit bei der Erfassung der Werkstücke bei gleichzeitig hoher Störsicherheit aufweist.

Diese Aufgabe wird erfindungsgemäß durch eine Vorrichtung gemäß Anspruch 1 gelöst. Vorteilhafte Ausgestaltungen der vorliegenden Erfindung sind Gegenstand der Unteransprüche.

Die vorliegende Erfindung zeigt eine Vorrichtung zum automatisierten Erfassen und Entnehmen von Werkstücken, mit einer Objekterkennungseinrichtung zum Erfassen der Werkstücke, einem Greifer zum Greifen der Werkstücke und einer Steuerung zur Auswertung der Daten der Objekterkennungseinrichtung und zur Ansteuerung des Greifers. Die Steuerung kann dabei insbesondere eine Auswerteeinrichtung zur Auswertung der Daten, ein Bahnplanungsmodul zur Bahnplanung und eine Steuerungseinheit zur Steuerung des Greifers umfassen. Erfindungsgemäß ist die Objekterkennungseinrichtung an einer Verfahranordnung angeordnet, durch welche sie aus einer Ruheposition in mindestens eine Messposition und zurück verfahrbar ist.

Erfindungsgemäß ist die Objekterkennungseinrichtung damit weiterhin separat vom Greifer an der Vorrichtung montiert und wird nicht mit diesem mitbewegt, weist jedoch eine eigene Verfahranordnung auf, welche ein Verfahren der Objekterkennungseinrichtung erlaubt. Hierdurch kann die Erfassung der Werkstücke in einer für diesen Zweck optimalen Position erfolgen, ohne dass die Objekterkennungseinrichtung mit dem Greifer zum Greifen des Werkstückes in Konflikt kommen würde.

Insbesondere kann die erfindungsgemäße Vorrichtung dabei zur Handhabung von ungeordnet angeordneten Werkstücken dienen, da die Position der Werkstücke durch eine geeignete Objekterkennungseinrichtung ermittelt werden kann und daher nicht vorab bekannt sein muss. Selbstverständlich kann die Vorrichtung jedoch auch dann eingesetzt werden, wenn die Werkstücke bereits mit einer gewissen Ordnung angeordnet sind.

Erfindungsgemäß befindet sich die Objekterkennungseinrichtung dabei in ihrer Ruheposition außerhalb eines Kollisionsbereiches mit dem Greifer. Hierdurch muss der Greifer beim Greifen der Werkstücke nicht mehr auf die Objekterkennungseinrichtung Rücksicht nehmen, da sich diese außerhalb des Kollisionsbereiches des Greifers befindet und damit keine relevante Störkante darstellt.

Weiterhin ist vorgesehen, dass die Objekterkennungseinrichtung sich in ihrer Messposition innerhalb eines Kollisionsbereiches mit dem Greifer befindet. Die Objekterkennungseinrichtung kann hierdurch näher an den Werkstücken platziert werden, welche sie erfassen soll, was die Genauigkeit der Erfassung erheblich erhöht.

Insbesondere kann die Objekterkennungseinrichtung sich dabei in ihrer Messposition oberhalb eines Entnahmebereiches der Werkstücke durch den Greifer befinden, beispielsweise oberhalb oder innerhalb eines Behälters oder einer Ablage- oder Transportfläche für die Werkstücke.

Vorteilhafterweise ist die Steuerung dabei so ausgeführt, dass die Bewegung der Objekterkennungseinrichtung mit der Entnahmebewegung des Greifers synchronisiert angesteuert wird. Hierdurch kann sichergestellt werden, dass keine Kollisionen zwischen der Objekterkennungseinrichtung und dem Greifer entstehen. Insbesondere kann die Objekterkennungseinrichtung während einer Ablegebewegung des Greifers in die Messposition gefahren werden und vor einer Aufnahmebewegung des Greifers zum Greifen eines Werkstückes in die Ruheposition verfahren werden. Die Erfassung der Werkstücke erfolgt damit immer dann, wenn der Greifer gerade ein Werkstück ablegt. Während dem Aufnehmen eines Werkstückes befindet sich die Objekterkennungseinrichtung dagegen in ihrer Ruheposition und damit vorteilhafterweise außerhalb des Kollisionsbereiches des Greifers.

In einer ersten Ausführungsform der vorliegenden Erfindung erfolgt die Bewegung der Objekterkennungseinrichtung zumindest auch in horizontaler Richtung. Insbesondere kann die Objekterkennungseinrichtung dabei seitlich über einen Entnahmebereich der Werkstücke gefahren werden, um so eine optimale Position für das Erfassen der Werkstücke zu erreichen.

Alternativ oder zusätzlich kann eine solche Bewegung auch in vertikaler Richtung erfolgen.

Als Objekterkennungseinrichtung zum Erfassen der Werkstücke kann erfindungsgemäß jedes beliebige System zum Einsatz kommen, welches die Identifizierung der Werkstücke und die Auswahl eines zum Greifen geeigneten Werkstückes erlaubt.

Das Erfassen der Werkstücke umfasst dabei typischerweise eine Datenerhebung durch einen Messvorgang. Dann erfolgt durch Auswertung der Daten eine Identifizierung der einzelnen Werkstücke im Erfassungsbereich, aus welchen ein zum Greifen geeignetes Werkstück ausgewählt wird. Auf Grundlage der Positionsdaten dieses Werkstückes wird die Bewegung des Greifers bzw. des diesen bewegenden Greifarmes geplant. Dabei kann eine Kollisionsprüfung durchgeführt werden, so dass ein Bewegungsablauf gewählt wird, bei welchem der Greifer bzw. der Greifarm nicht mit Störkanten wie beispielsweise den anderen Werkstücken oder den Seitenwänden des Behälters kollidiert. Anhand der so berechneten Daten wird dann der Greifer bzw. der Greifarm angesteuert.

Befindet sich die Objekterkennungseinrichtung in ihrer Ruheposition außerhalb des Kollisionsbereiches des Greifers, muss die Objekterkennungseinrichtung dabei erfindungsgemäß bei der Kollisionsprüfung nicht als Störkante berücksichtigt werden. Vorteilhafterweise verfährt der Greifer dabei erst dann in den Entnahmebereich, wenn die Objekterkennungseinrichtung aus dem Kollisionsbereich mit dem Greifer herausgefahren wurde. Alternativ ist auch während des Greifvorgangs eine synchronisierte Bewegung der Objekterkennungseinrichtung im Kollisionsbereich mit dem Greifer denkbar.

Als Objekterkennungseinrichtung kommen dabei insbesondere optische Sensoren zum Einsatz, wobei insbesondere Laser- und/oder Bildsensoren zum Einsatz kommen können. Die Sensoren können dabei zweidimensional, zweieinhalbdimensional und dreidimensional arbeiten. Besonders bevorzugt kommt dabei ein Laser-Scanner zum Einsatz, insbesondere ein 3D-Laser-Scanner.

Erfindungsgemäß kann dabei vorgesehen sein, dass die Objekterkennungseinrichtung einen Sensor umfasst, welcher zur Erfassung der Werkstücke in einer Messposition der Objekterkennungseinrichtung verschwenkt wird, um den Entnahmebereich zu erfassen. Ein solches Verschwenken des Sensors in der Messposition erlaubt dabei eine bessere Erfassung der Werkstücke im Entnahmebereich. Insbesondere kann so auch vermieden oder reduziert werden, dass die Seitenwände eines Behälters, in welchem die Werkstücke aufgenommen sind, und/oder die Werkstücke selbst Schatten werfen.

Insbesondere kann der Sensor in einer Messposition in etwa mittig oberhalb des Entnahmebereiches angeordnet sein.

Alternativ oder zusätzlich ist es denkbar, den Sensor während der Messung über den Entnahmebereich zu verfahren, wozu insbesondere die ohnehin vorhandene Verfahranordnung eingesetzt werden kann.

Besonders bevorzugt umfasst die Objekterkennungseinrichtung dabei einen Laser-Sensor. Insbesondere kann es sich dabei bei dem Laser-Sensor um einen Laser-Scanner handeln. Vorteilhafterweise wird dieser wie oben beschrieben über den Entnahmebereich verschwenkt und/oder verfahren.

In einer weiteren Ausführungsform der vorliegenden Erfindung kann vorgesehen sein, dass die Bewegung der Objekterkennungseinrichtung zumindest auch in vertikaler Richtung erfolgt. Zum einen kann auch eine solche Bewegung in vertikaler Richtung ein Zurückziehen der Objekterkennungseinrichtung aus dem Kollisionsbereich mit dem Greifer erlauben. Alternativ oder zusätzlich erlaubt eine solche Bewegung in vertikaler Richtung die Beibehaltung einer gleichbleibenden Genauigkeit bei der Erfassung der Werkstücke.

Besonders bevorzugt ist dabei vorgesehen, die Objekterkennungseinrichtung mit sinkendem Füllstand des Entnahmebereiches in vertikaler Richtung nachzuführen. Insbesondere kann durch die vertikale Nachführung der Objekterkennungseinrichtung sichergestellt werden, dass die Objekterkennungseinrichtung immer in einem vorbestimmten Abstandsbereich zu den zuoberst liegenden Werkstücken im Entnahmebereich angeordnet ist, wenn sich diese in einer Messposition befindet.

Hierdurch wird über den gesamten Entleerzyklus beispielsweise eines Behälters eine gleichbleibende Qualität der erhobenen Daten gewährleistet. Dies ist insbesondere dann relevant, wenn ein Behälter mit einer gewissen Höhe eingesetzt wird, aus welchem die Werkstücke entnommen werden sollen.

Dabei kann vorgesehen sein, dass die Objekterkennungseinrichtung bis in das Innere eines Behälters abgesenkt wird.

In einer weiteren Ausführungsform der vorliegenden Erfindung kann eine horizontale Verfahrbewegung der Objekterkennungseinrichtung mit einer vertikalen Verfahrbewegung kombiniert werden. So kann die Objekterkennungseinrichtung beispielsweise horizontal über den Entnahmebereich verfahren werden, und dort in vertikaler Richtung in eine Messposition verfahren werden.

Weiterhin kann erfindungsgemäß vorgesehen sein, dass die Objekterkennungseinrichtung einen Fotosensor und insbesondere eine Kamera umfasst. Auch durch einen solchen Fotosensor ist für eine Erfassung der Werkstücke denkbar. Weiterhin können dabei auch mehrere Fotosensoren und/oder Kameras und/oder eine Kombination aus einem 3D-Laser-Sensor und einem Fotosensor eingesetzt werden.

Wird ein Fotosensor und insbesondere eine Kamera eingesetzt, ist es denkbar, die Schärfeneinstellung des Sensors mit sinkendem Füllstand des Entnahmebereiches nachzustellen. Insbesondere kann hierbei eine Schärfeneinstellung einer Optik des Sensors entsprechend angesteuert werden. Auch hierdurch wird eine gleichbleibende Erfassungsqualität über den gesamten Entnahmeprozess erreicht.

Besonders bevorzugt wird die erfindungsgemäße Vorrichtung zum automatisierten Entnehmen von Werkstücken aus einem Behälter eingesetzt.

Alternativ kann die Objekterkennungseinrichtung jedoch auch eingesetzt werden, um Werkstücke auf einer Zwischenstation zu erfassen, auf welcher ein Greifer Werkstücke nach einem Entnehmen aus einem Behälter ablegt. Insbesondere kann die Objekterkennungseinrichtung dabei dazu eingesetzt werden, um einen weiteren Greifer anzusteuern, welcher die Werkstücke wieder von der Zwischenstation abnimmt.

Weiterhin kann vorgesehen sein, dass die Objekterkennungseinrichtung näher an einen Teilbereich des Erfassungsbereiches herangefahren wird, um dort befindliche Werkstücke genauer zu erfassen. Beispielsweise kann dabei eine erste Messposition zur normalen Erfassung des gesamten Erfassungsbereiches vorgesehen sein. Wird eine genauere Erfassung benötigt, kann die Objekterkennungseinrichtung aus dieser ersten Messposition in eine zweite Messposition verfahren werden, in welcher zwar nicht mehr der gesamte Erfassungsbereich erfasst wird, der nun erfasste Teilbereich jedoch mit einer höheren Genauigkeit erfasst werden kann. Beispielsweise kann die Objekterkennungseinrichtung dabei an ein schwer zu erfassendes Werkstück herangefahren werden, oder zur Überprüfung eines Werkstückes auf die Erfüllung vorgegebener Kriterien eingesetzt werden. insbesondere kann die zweite Messposition von der Position eines nochmals genauer zu erfassenden Werkstückes abhängen.

Die vorliegende Erfindung umfasst weiterhin ein Verfahren zum automatisierten Erfassen und Entnehmen von Werkstücken, welches die Schritte
- Erfassen der Werkstücke mit einer Objekterkennungseinrichtung und
- Greifen der Werkstücke mit einem Greifer umfasst. Erfindungsgemäß ist dabei vorgesehen, dass die Objekterkennungseinrichtung welche nicht mit dem Greifer mitbewegt wird, zum Erfassen der Werkstücke aus einer Ruheposition in mindestens eine Messposition verfahren wird. Weiterhin ist vorgesehen, dass zum Greifen eines Werkstückes die Objekterkennungseinrichtung aus der Messposition in die Ruheposition zurück verfahren wird. Erfindungsgemäß befindet sich die Objekterkennungseinrichtung in ihrer Ruheposition außerhalb eines Kollisionsbereichs mit dem Greifer und in ihrer Messposition innerhalb eines Kollisionsbereichs mit dem Greifer.

Vorteilhafterweise wird das erfindungsgemäße Verfahren dabei so durchgeführt, wie dies bereits oben im Hinblick auf die erfindungsgemäße Vorrichtung beschrieben wurde. Insbesondere erfolgt das erfindungsgemäße Verfahren dabei unter Verwendung einer Vorrichtung, wie sie oben beschrieben wurde.

Die vorliegende Erfindung umfasst weiterhin ein Computerprogramm zur Durchführung eines erfindungsgemäßen Verfahrens. Insbesondere umfasst das Computerprogramm dabei Befehle, welche ein erfindungsgemäßes Verfahren auf einer Vorrichtung zur automatisierten Handhabung von Werkstücken implementiert. Insbesondere dient das erfindungsgemäße Computerprogramm dabei der Implementierung einer Steuerung für eine Vorrichtung, wie sie oben beschrieben wurde.

Die erfindungsgemäße Vorrichtung kann weiterhin Bestandteil einer Vorrichtung zum automatisierten Entnehmen von in einem Behälter angeordneten Werkstücken sein, welche eine erste Objekterkennungseinrichtung zum Erfassen der Werkstücke und einen ersten Greifer zum Greifen und Entnehmen der Werkstücke aus dem Behälter umfasst, sowie eine Steuerung zur Auswertung der Daten der ersten Objekterkennungseinrichtung, zur Bahnplanung und zur Ansteuerung des ersten Greifers. Weiterhin kann dabei eine Zwischenstation vorgesehen sein, auf welcher der erste Greifer das Werkstück nach dem Entnehmen aus dem Behälter ablegt, und eine Positioniervorrichtung, welche das Werkstück ausgehend von der Zwischenstation genauer positioniert und/oder vereinzelt.

Insbesondere kann als Positioniervorrichtung dabei ein Greifer eingesetzt werden, wobei es sich vorteilhafterweise um einen zweiten Greifer handelt. Erfindungsgemäß können der erste und/oder der zweite Greifer über automatisch angesteuerte Stellachsen eines Greifarmes bewegt werden. In einer ersten Ausführungsvariante können dabei der erste und der zweite Greifer an einem gemeinsamen Greifarm angeordnet sein und über diesen bewegt werden. Bevorzugt sind der erste und der zweite Greifer jedoch an separaten Greifarmen angeordnet und können so unabhängig voneinander bewegt werden.

Bevorzugt kann eine zweite Objekterkennungseinrichtung auch auf der Zwischenstation angeordnet sein, um auf der Zwischenstation abgelegte Werkstücke zu erfassen und einen Greifer der Positioniervorrichtung, welcher die Werkstücke von der Zwischenstation abnimmt, anzusteuern.

Insbesondere kann es sich dabei bei der erfindungsgemäßen verfahrbaren Objekterkennungseinrichtung um die erste Objekterkennungseinrichtung einer solchen Vorrichtung handeln.

Alternativ oder zusätzlich kann eine erfindungsgemäße verfahrbare Objekterkennungseinrichtung auch als zweite, auf der Zwischenstation angeordnete Objekterkennungseinrichtung eingesetzt werden.

Vorteilhafterweise handelt es sich dabei bei dem ersten Greifer zum Greifen des Werkstückes um einen magnetischen und/oder pneumatischen Greifer, insbesondere um einen magnetischen Greifer. Weiterhin vorteilhafterweise handelt es sich bei dem Greifer der Positioniervorrichtung um einen mechanischen Greifer.

Dabei können die Werkstücke von dem ersten Greifer ungeordnet auf der Zwischenstation abgelegt werden.

Insbesondere können die Werkstücke von dem ersten Greifer aus einer gewissen Höhe auf die Zwischenstation fallen gelassen werden. Vorteilhafterweise ist dabei eine schräge Ebene vorgesehen, auf welche die Werkstücke fallen gelassen werden.

Weiterhin vorteilhafterweise umfasst die Zwischenstation eine Transporteinrichtung, durch welche die Werkstücke von einem Ablegebereich zu einem Entnahmebereich transportiert werden. Vorteilhafterweise ist die zweite Objekterkennungseinrichtung oberhalb der Transporteinrichtung im Entnahmebereich angeordnet.

Vorteilhafterweise erfolgen alle Schritte bei der Handhabung der Werkstücke durch das erfindungsgemäße Verfahren und/oder die erfindungsgemäße Vorrichtung voll automatisiert und ohne dass ein Benutzereingriff notwendig wäre.

Der Gegenstand der vorliegenden Erfindung wird nun anhand von Ausführungsbeispielen sowie Zeichnungen näher beschrieben.

Dabei zeigen:
- Figur 1: Ein Ablaufschema einer erfindungsgemäßen Erfassung von Werkstücken und einer entsprechenden Ansteuerung eines Greifers,
- Figur 2: Ein erstes Ausführungsbeispiel einer Vorrichtung, welche zum Bewegen eines erfindungsgemäßen Greifers eingesetzt werden kann,
- Figur 3: Ein zweites Ausführungsbeispiel einer Vorrichtung, welche zum Bewegen eines erfindungsgemäßen Greifers eingesetzt werden kann,
- Figur 4: Ein erstes Ausführungsbeispiel einer erfindungsgemäßen Vorrichtung zum automatisierten Entnehmen von ungeordnet in einem Behälter angeordneten Werkstücken,
- Figur 4a: Eine alternative Ausführung einer Transportstrecke, wie sie bei dem in Fig. 4 gezeigten Ausführungsbeispiel auf der Zwischenstation eingesetzt werden kann,
- Figur 5: Einen ersten Greifer des in Figur 4 gezeigten Ausführungsbeispiels,
- Figur 6: Eine Detailansicht des in Figur 5 gezeigten Greifers,
- Figur 7: Einen zweiten Greifer des in Figur 4 gezeigten Ausführungsbeispiels,
- Figur 8: Ein Ausführungsbeispiel einer verfahrbaren Objekterkennungseinrichtung, wie sie in dem in Figur 4 gezeigten Ausführungsbeispiel einsetzbar ist,
- Figur 9: Die in Figur 8 gezeigte verfahrbare Objekterkennungseinrichtung in einer Seitenansicht,
- Figur 10: Ein zweites Ausführungsbeispiel einer erfindungsgemäßen Vorrichtung zum automatisierten Entnehmen von ungeordnet in einem Behälter angeordneten Werkstücken, bei welchem ein Ausführungsbeispiel einer erfindungsgemäßen Zwischenstation mit umlaufender Transportstrecke eingesetzt wird,
- Figur 11: Ein drittes Ausführungsbeispiel einer Vorrichtung zum automatisierten Entnehmen von ungeordnet in einem Behälter angeordneten Werkstücken, welches auf den in Figur 4 gezeigten Ausführungsbeispiel beruht und weiterhin ein Ausführungsbeispiel einer zweiten Zwischenstation umfasst, auf welcher Werkstücke in mindestens einer Aufnahme abgelegt werden können,
- Figur 12: Das Ausführungsbeispiel einer zweiten Zwischenstation, wie es bei der Vorrichtung gemäß Figur 11 eingesetzt wird, in einer Detailansicht,
- Figur 13: Ein viertes Ausführungsbeispiel einer erfindungsgemäßen Vorrichtung zum automatisierten Entnehmen von ungeordnet in einem Behälter angeordneten Werkstücken, welches auf den in Figur 4 gezeigten Ausführungsbeispiel beruht und ein zweites Ausführungsbeispiel einer zweiten Zwischenstation umfasst, auf welcher Werkstücke in einer Aufnahme abgelegt werden können,
- Figur 14: Ein fünftes Ausführungsbeispiel einer erfindungsgemäßen Vorrichtung zum automatisierten Entnehmen von ungeordnet in einem Behälter angeordneten Werkstücken, welches auf der in Figur 4 gezeigten Ausführungsform beruht und weiterhin eine Messeinrichtung umfasst, mittels welcher eine Messung der Greifgenauigkeit möglich ist,
- Figur 15: Eine Detaildarstellung eines Ausführungsbeispiels einer erfindungsgemäßen Messeinrichtung, in welcher die Greifgenauigkeit gemessen werden kann,
- Figur 16: Ein Ausführungsbeispiel eines erfindungsgemäßen Greifers mit einem Stabilisatorelement,
- Figur 17: Eine Schnittansicht durch das in Figur 16 dargestellte Ausführungsbeispiel eines Greifers,
- Figur 18: Ein erstes Ausführungsbeispiel einer erfindungsgemäßen Ausgleichseinheit,
- Figur 19: Eine Schnittansicht durch die in Figur 18 gezeigte Ausgleichseinheit,
- Figur 20: Ein zweites Ausführungsbeispiel einer erfindungsgemäßen Ausgleichseinheit,
- Figur 21: Eine Frontalansicht der und eine Schnittansicht durch die in Figur 20 gezeigte Ausgleichseinheit,
- Figur 22: Eine Seitenansicht der in Figur 20 gezeigten Ausgleichseinheit,
- Figur 23: Ein Ablaufschema eines Verfahrens zur Erfassung von Werkstücken gemäß der vorliegenden Erfindung,
- Figur 24: Ein Ablaufschema eines Verfahrens zum erfindungsgemäßen Greifen von Werkstücken aus einem Behälter, und
- Figur 25: Ein Ablaufschema eines Verfahrens zum erfindungsgemäßen Greifen von Werkstücken von einer Zwischenstation.

Im folgenden sollen Ausführungsbeispiele von Vorrichtungen zum automatisierten Handhaben von Werkstücken dargestellt werden, bei welchen die vorliegende Erfindung zum Einsatz kommt.

Die einzelnen Ausführungsbeispiele dienen dabei insbesondere der vollautomatischen Vereinzelung und/oder Positionierung von Werkstücken. Als Werkstücke können dabei beliebige Elemente gehandhabt werden, insbesondere neben Werkstücken mit einer oder mehreren Symmetrieebenen oder Symmetrieachsen auch unsymmetrische Werkstücke. Weiterhin können dabei Werkstücke gehandhabt werden, welche nur einen Greifpunkt aufweisen, oder Werkstücke mit mehreren Greifpunkten. Insbesondere können die erfindungsgemäßen Vorrichtungen dabei zum Handhaben von metallischen Werkstücken eingesetzt werden. Selbstverständlich können die Werkstücke jedoch aus beliebigen Materialien bestehen, und insbesondere auch aus Kunststoff. Weiterhin können die Werkstücke auch aus mehreren Materialien bestehen, bspw. aus einer Kombination von Kunststoff- und Metallteilen.

Teilweise wird dabei ein Greifer zum Greifen des Werkstücks mit einer Objekterkennungseinrichtung zum Erfassen der Werkstücke kombiniert, so dass der Greifer anhand der von der Objekterkennungseinrichtung ermittelten Daten angesteuert werden kann. Insbesondere dienen solche Vorrichtungen dem automatisierten Handhaben von ungeordneten Werkstücken.

Die Objekterkennungseinrichtung zum Erfassen der Werkstücke kann dabei einen beliebigen Sensor umfassen, dessen Daten eine Objekterkennung der Werkstücke erlauben. Insbesondere kann dabei ein Laserscanner eingesetzt werden. Alternativ oder zusätzlich kann die Objekterkennungseinrichtung ein oder mehrere Kameras umfassen. Bevorzugt erlaubt die Objekterkennungseinrichtung dabei eine 3D-Objekterkennung. Alternativ ist jedoch eine 2D- oder 2,5D-Objekterkennung denkbar.

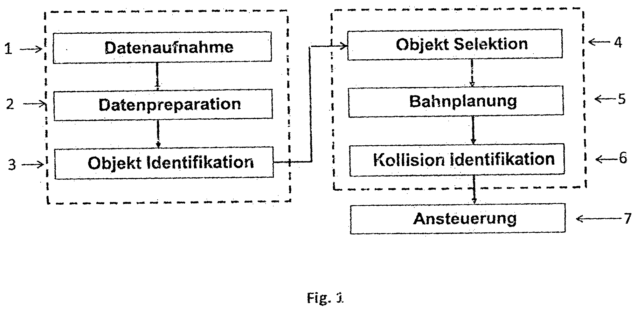

Figur 1 zeigt den typischen Ablauf bei der Erfassung von ungeordneten Werkstücken und der entsprechenden Ansteuerung eines Greifers. In Schritt 1 wird eine Messung durch die Objekterkennungseinrichtung durchgeführt, durch welche Daten erhalten werden. Diese Daten werden in einem Schritt 2 aufgearbeitet, um in einem Schritt 3 eine Identifikation der einzelnen Werkstücke zu ermöglichen. Ggf. kann die Objekterkennungseinrichtung jedoch auch anhand von vorbekannten Positionsdaten der Werkstücke arbeiten.

In Schritt 4 wird aus den identifizierten Werkstücken ein Werkstück ausgewählt, welches durch den Greifer gegriffen werden kann. Anhand der Positionsdaten des ausgewählten Werkstücks wird in Schritt 5 die Bahn für den Greifer bzw. den Greifer bewegenden Greifarm berechnet. In Schritt 6 wird diese Bahn dann auf mögliche Kollisionen mit Störkanten überprüft, um Kollisionen zu verhindern. Wird eine kollisionsfreie Bahn gefunden, wird diese in Schritt 7 zur Ansteuerung des Greifers, d. h. zum Heranfahren des Greifers in eine Greifposition an das ausgewählte Werkstück, eingesetzt.

Ein solches Verfahren kann dabei immer dann zum Einsatz kommen, wenn gemäß der vorliegenden Erfindung eine Erfassung der Werkstücke und entsprechende Ansteuerung eines Greifers erfolgt.

Insbesondere können die erfindungsgemäßen Vorrichtungen und Verfahren dabei zum Handhaben von ungeordneten Werkstücken dienen, da die Position der Werkstücke durch eine geeignete Objekterkennungseinrichtung ermittelt werden kann und daher nicht vorab bekannt sein muss. Selbstverständlich kann die vorliegende Erfindung jedoch auch dann eingesetzt werden, wenn die Werkstücke bereits mit einer gewissen Ordnung angeordnet sind.

Zum Bewegen des Greifers können beliebige Vorrichtungen mit mehreren Bewegungsachsen eingesetzt werden, über deren Ansteuerung der Greifer auf einer definierten Bahn bewegt und an das zu greifende Werkstück herangefahren werden kann.

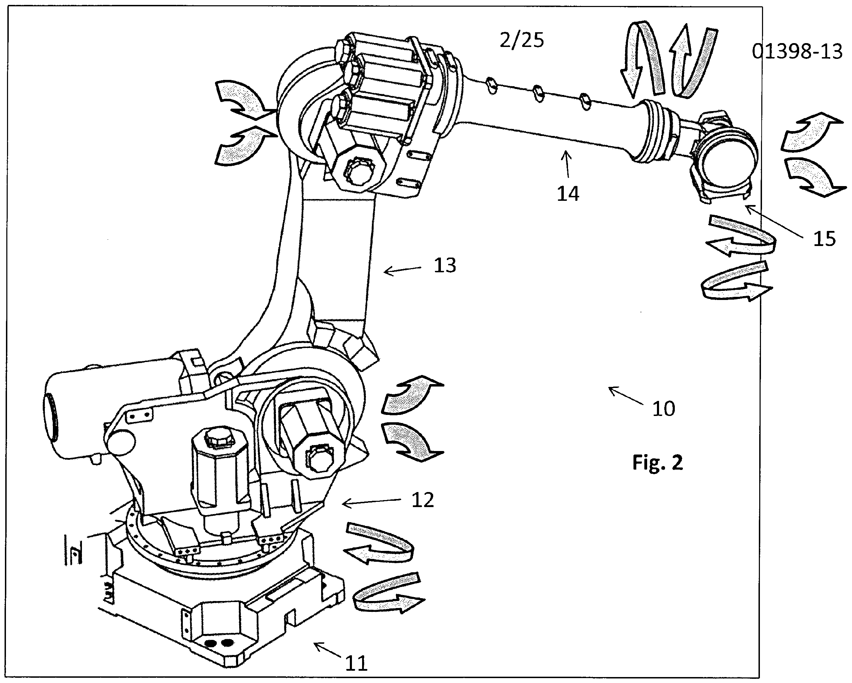

In Figur 2 ist ein erstes Ausführungsbeispiel einer solchen Vorrichtung zum Bewegen eines Greifers dargestellt, wobei es sich um einen Multiachsenroboter 10 handelt. Im Ausführungsbeispiel handelt es sich dabei um einen Sechsachsenroboter. Dieser umfasst eine Basis 11, auf welcher ein Podest 12 um eine vertikale Drehachse drehbar angeordnet ist. Am Podest 12 ist ein Schwenkarm um eine horizontale Schwenkachse schwenkbar angeordnet. Am Schwenkarm 13 ist ein Dreharm 14 um eine horizontale Schwenkachse angeordnet. Der Dreharm 14 weist weiterhin eine Rotationsachse auf, welche eine Drehung um eine parallel zum Dreharm 14 angeordnete Drehachse erlaubt. Am Dreharm 14 ist ein Greifarm 15 um eine senkrecht zur Drehachse des Dreharms 14 angeordnete Schwenkachse angeordnet. Der Greifarm weist eine Drehachse auf, welche senkrecht auf der Schwenkachse steht. Am Greifarm kann erfindungsgemäß ein Greifer angeordnet werden, welcher so über die Ansteuerung der Bewegungsachsen des Roboters im Raum bewegt und verschwenkt werden kann.

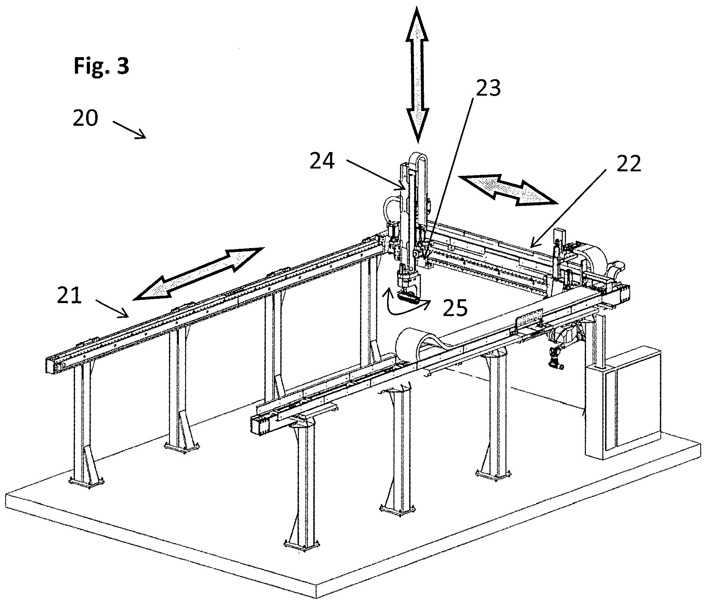

In Figur 3 ist eine alternative Ausführungsform für eine Vorrichtung zum Bewegen eines Greifers dargestellt, welche in allen Ausführungsbeispielen der vorliegenden Erfindung an Stelle eines Roboters zum Einsatz kommen kann. Dabei handelt es sich um ein Flächenportal, welches drei lineare Bewegungsachsen aufweist und zusätzlich mit einer weiteren Drehachse ausgestattet ist. Dabei sind Portalschienen 21 vorgesehen, an welchen ein Portalbalken 22 linear verfahrbar angeordnet ist. Am Portalbalken 22 ist ein Schlitten 23 ebenfalls linear verfahrbar angeordnet. Am Schlitten 23 ist ein Arm in vertikaler Richtung verfahrbar angeordnet. Dieser Arm ist zusätzlich mit einer Drehachse 25 ausgestattet. Der Arm kann dabei an seinem unteren Ende einen Greifer gemäß der vorliegenden Erfindung aufweisen.

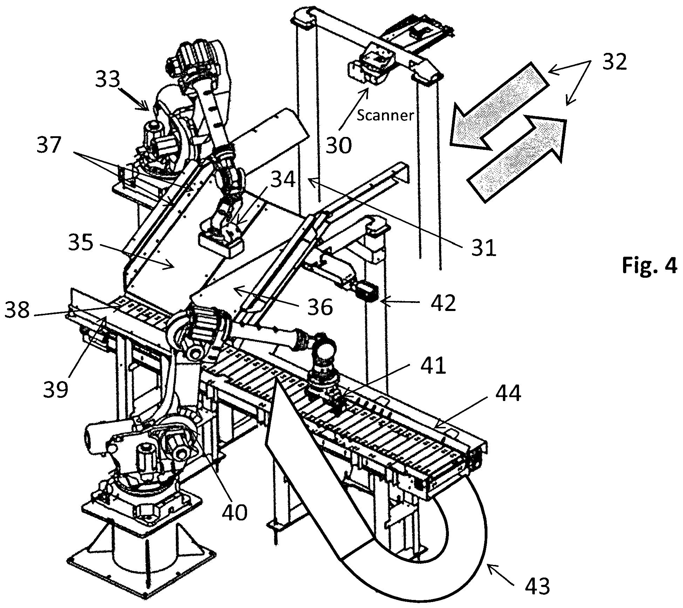

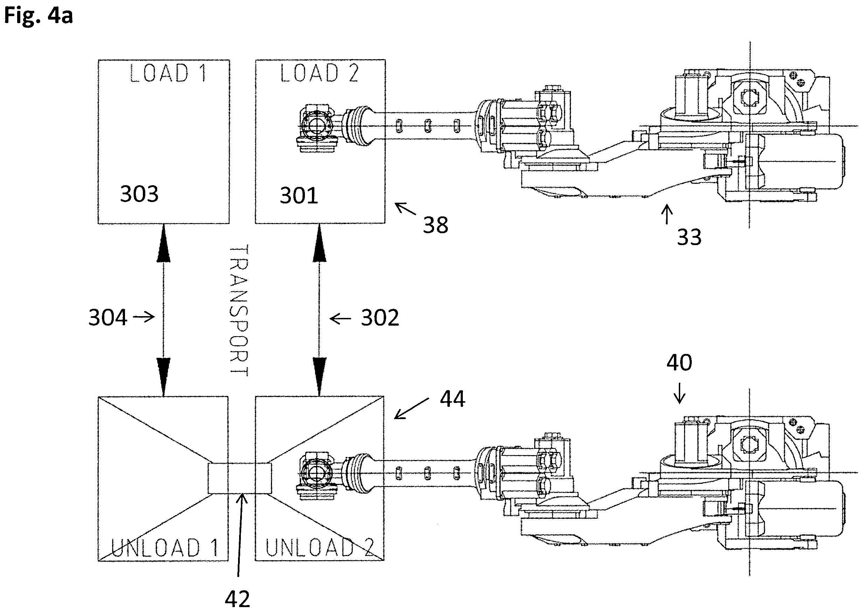

In Figur 4 ist ein erstes Ausführungsbeispiel einer erfindungsgemäßen Vorrichtung zum automatisierten Entnehmen von Werkstücken dargestellt, welches eine Objekterkennungseinrichtung 30 zum Erfassen der Werkstücke mit einem ersten Greifer 34 zum Greifen der Werkstücke kombiniert, um die ungeordnet in einem Behälter angeordneten Werkstücke mit dem ersten Greifer 34 aus dem Behälter zu entnehmen. Dabei werden die Werkstücke vom ersten Greifer 34 nicht direkt an einer Zielaufnahme angeordnet, sondern ungeordnet auf einer Zwischenstation abgelegt, von wo aus sie über einen zweiten Greifer 41 genauer positioniert werden.

Das Ausführungsbeispiel weist dabei eine Aufnahme 31 für einen nicht dargestellten Behälter mit ungeordnet in diesem angeordneten Werkstücken auf. Weiterhin kann eine Ein- und Ausschleusevorrichtung 32 für solche Behälter vorgesehen sein. Oberhalb des nicht dargestellten Behälters ist die Objekterkennungseinrichtung 30 zum Erfassen der Werkstücke im Behälter vorgesehen. Deren Daten werden wie eingangs beschrieben so ausgewertet, dass über den ersten Greifer 34 die Werkstücke im Behälter gegriffen und aus diesem entnommen werden können. Der erste Greifer 34 wird dabei im Ausführungsbeispiel über einen Roboter 33 bewegt. Alternativ könnte hier auch ein Flächenportal zum Einsatz kommen.

Als erster Greifer 34 kommt im Ausführungsbeispiel ein Magnetgreifer zum Einsatz, da ein solcher Magnetgreifer weniger hohe Anforderungen an die Zustellgenauigkeit des Greifers zum Werkstück stellt und daher besser dazu geeignet ist, Behälter mit chaotisch in diesem angeordneten Werkstücken, welche zudem übereinander in beliebigen Positionen geschichtet sein können, tatsächlich zu 100 % zu entleeren, wie dies gemäß dem Ausführungsbeispiel der vorliegenden Erfindung möglich ist.

Insbesondere ist es bei einem Magnetgreifer möglich, Werkstücke auch mit einer nichtoptimalen Greifposition zu ergreifen. Insbesondere kann dabei zwischen der Greiffläche des Magnetgreifer und einer Hauptfläche des Werkstückes ein gewisser Versatz bestehen. Zudem ist gegebenenfalls auch dann noch ein Greifen möglich, wenn der Magnetgreifer lediglich an dem höchsten Punkt eines Werkstückes angreift. Kann die Steuerung daher anhand der Daten der Objekterkennungseinrichtung kein Werkstück identifizieren, welches optimal gegriffen werden kann, bei welchem also eine optimale Überlagerung der Greiffläche und einer Hauptfläche des Werkstückes vorliegt, so kann alternativ auf ein Greifen mit Versatz oder ein Greifen an einem höchsten Punkt zurückgegriffen werden. Ebenso kann auf ein solches Greifen zurückgegriffen werden, wenn eine andere Greifstrategie nicht zum Aufnehmen eines Teiles geführt hat.

Alternativ zu dem magnetischen Greifer 34 könnte auch ein pneumatischer Greifer eingesetzt werden. Ebenso ist es denkbar, bei dem in Figur 4 gezeigten Ausführungsbeispiel den magnetischen Greifer 34 durch einen mechanischen Greifer zu ersetzen, wenn die Werkstücke so geformt sind, dass sie durch einen mechanischen Greifer sicher auch im Behälter gegriffen werden können.

Weiterhin kann die erste Objekterkennungseinrichtung 30 eingesetzt werden, um fälschlicherweise in den Behälter gelangte Werkstücke zu erkennen. Wird dabei ein Werkstück erfasst, welches nicht die geforderten Werkstückkriterien erfüllt und daher nicht an einer Zielaufnahme positioniert werden soll, so kann dieses ausgesondert werden, bspw. indem das Werkstück gegriffen und in einen entsprechenden Behälter abgelegt wird.

Gemäß dem Ausführungsbeispiel werden die Werkstücke durch den ersten Greifer nicht an einer Zielaufnahme angeordnet, sondern auf einer Zwischenstation abgelegt, von wo aus sie durch den zweiten Greifer 41 nochmals aufgenommen und dann genauer positioniert werden. Das Ablegen der Werkstücke auf der Zwischenstation kann dabei ungeordnet erfolgen. Insbesondere können die Werkstücke dabei vom Greifer 34 aus einer vorgegebenen Höhe auf einen Ablegebereich 35 der Zwischenstation fallen gelassen werden. Der Ablegebereich 35 ist dabei als eine schiefe Ebene ausgeführt, von welcher die Werkstücke zu einer Weitertransportzone rutschen.

Der Ablegebereich 35 kann ein oder mehrere Höhensensoren aufweisen, welche die Höhe eines am Greifer 34 angeordneten Werkstücks über dem Ablegebereich bestimmen. Insbesondere kann dabei eine Lichtschrankenanordnung 37 vorgesehen sein, welche seitlich der schrägen Ebene 35 angeordnet ist. Gelangt dabei ein am Greifer 34 angeordnetes Werkstück in den Bereich der Lichtschrankenanordnung, so bedeutet dies, dass das Werkstück in einer bestimmten Höhe über der schrägen Ebene 35 angeordnet ist. Daraufhin lässt der Greifer 34 das Werkstück fallen. Diese Vorgehensweise hat den Vorteil, dass die Lage des Werkstückes am Greifer 34 nicht genau bekannt sein muss. Dennoch werden Kollisionen des Greifers mit dem Ablegebereich verhindert. Insbesondere kann dabei vorgesehen sein, dass der Greifer 34 nach dem Aufnehmen eines Werkstückes aus dem Behälter das Werkstück zunächst in horizontaler Richtung in eine Position über den Ablegebereich 35 bewegt, und dann soweit absenkt, bis der Höhensensor anspricht.

Die Zwischenstation weist weiterhin ein Transportband 38 auf, welches die Werkstücke von dem Ablegebereich 35 weiter zu einem Entnahmebereich 44 transportiert.

Die Werkstücke rutschen dabei von der schrägen Ebene auf das Transportband 38, wobei die schräge Ebene 35 durch seitliche Anschlagbereiche 36 begrenzt sein kann, welche die schräge Ebene nach unten hin verengen, so dass die Werkstücke zu einem definierten Weitertransportbereich des Transportbandes gelenkt werden.

Vorteilhafterweise ist dieser Weitertransportbereich mit einem Belegungssensor 39 ausgestattet. Insbesondere kann es sich hierbei um eine Lichtschrankenanordnung handeln, welche die Höhe der auf dem Transportband abgelegten Werkstücke ermittelt. Stapeln sich dabei mehrere Werkstücke übereinander, spricht der Belegungssensor an. In diesem Fall wird die weitere Beladung der Zwischenstation durch den ersten Greifer 34 gestoppt, bis der Belegungssensor wieder einen ausreichend freien Weitertransportbereich signalisiert.

Die Werkstücke werden auf dem Transportband 38 in den Entnahmebereich 44 transportiert und dort von dem zweiten Greifer 41 gegriffen, um von dort aus genauer positioniert oder vereinzelt zu werden. Dabei ist eine zweite Objekterkennungseinrichtung 42 vorgesehen, welche die Werkstücke im Entnahmebereich erfasst, wobei der zweite Greifer 41 anhand der Daten der zweiten Objekterkennungseinrichtung angesteuert wird. Zum Bewegen des zweiten Greifers 41 ist wiederum ein Roboter 40 vorgesehen. Alternativ könnte auch hier auf ein Flächenportal zurückgegriffen werden.

Die zweite Objekterkennungseinrichtung 42 ist zum Ergreifen der Werkstücke notwendig, da diese ungeordnet auf der Zwischenstation bzw. dem Transportband liegen. Die Greifsituation auf der Zwischenstation ist jedoch erheblich einfacher als beim Behälter, da die Werkstücke zumindest in Höhenrichtung alle auf der gleichen Ebene, d. h. auf dem Transportband angeordnet sind. Zudem sind die Werkstücke bereits vorvereinzelt und lassen sich so leichter greifen. Zudem weisen die Werkstücke einen definierten Abstand zu der Objekterkennungseinrichtung 42 auf, so dass diese genauer arbeitet.

Weiterhin kann die zweite Objekterkennungseinrichtung 42 eingesetzt werden, um fälschlicherweise auf die Zwischenstation gelangte Werkstücke zu erkennen. Wird dabei auf der Zwischenstation ein Werkstück erfasst, welches nicht die geforderten Werkstückkriterien erfüllt und daher nicht an einer Zielaufnahme positioniert werden soll, so kann dieses ausgesondert werden, bspw. indem das Werkstück gegriffen und in einen entsprechenden Behälter abgelegt oder indem es nicht gegriffen und über das Transportband weiter in einen Behälter transportiert wird.

Dabei kann vorgesehen sein, dass die zweite Objekterkennungseinrichtung eine genauere Erfassung der Werkstücke ermöglicht als die erste Objekterkennungseinrichtung, so dass falsche Werkstücke zuverlässig auf der Zwischenstation erkannt werden.

Erfindungsgemäß kann daher als zweiter Greifer ein mechanischer Greifer 41 eingesetzt werden, welcher zwar höhere Anforderungen an das Zustellen des Greifers an das Werkstück stellt, jedoch auch ein erheblich exakteres Greifen und Positionieren der Werkstücke ermöglicht. Im Ausführungsbeispiel handelt es sich bei dem mechanischen Greifer dabei um einen Fingergreifer, insbesondere um einen Zweifingergreifer wie er später noch dargestellt werden soll.

Die Steuerung des Transportbandes steht dabei mit der Objekterkennungseinrichtung 42 und der Steuerung des Greifers 41 in Verbindung. Dabei stoppt das Transportband jeweils, wenn eine Erfassung der Werkstücke und das darauf folgende Greifen eines Werkstücks durch den Greifer 41 erfolgt. Liegen dagegen keine Werkstücke mehr im Entnahmebereich 44, wird das Transportband weiterbewegt, bis sich wieder Werkstücke im Entnahmebereich 44 befinden. Hierfür kann neben den Daten der Objekterkennungseinrichtung gegebenenfalls auch eine seitlich am Transportband im Entnahmebereich angeordnete Lichtschranke eingesetzt werden.

Die Seitenwände des Transportbandes 38 können abgeschrägt sein, wie dies in Figur 4 zu erkennen ist. Hierdurch wird verhindert, dass Werkstücke in ungünstigen Positionen, welche kein Greifen erlauben, direkt an der Seitenwand stehen bleiben. Weiterhin kann vorgesehen sein, dass quer über das Transportband 38 eine Umorientierungs-Vorrichtung vorgesehen ist, welche ungünstig angeordnete Werkstücke umwirft und so in eine bessere Position zum Greifen durch den zweiten Greifer 41 bringt. Beispielsweise kann hierfür eine nicht dargestellte Klappe oder ein Anschlagbalken, welche über dem Transportband 38 angeordnet sind, vorgesehen sein. Insbesondere kann eine solche Umorientierungs-Vorrichtung zwischen dem Weitertransportbereich 38 und dem Entnahmebereich 44 des Transportbandes angeordnet sein.

Dabei kann erfindungsgemäß vorgesehen sein, dass Werkstücke, welche durch den Greifer 41 überhaupt nicht gegriffen werden können, in einen am Ende der Transportstrecke 38 angeordneten Auffangbehälter fallen. Alternativ kann eine umlaufende Transportstrecke 43 vorgesehen sein, wie diese später noch detaillierter beschrieben wird.

Alternativ zu dem Transportband, welches in Fig. 4 als Transporteinrichtung eingesetzt wird, stehen noch eine Vielzahl von anderen Alternativen für die Ausführung der Transporteinrichtung zur Verfügung. Grundlegende Idee der Zwischenstation ist dabei die Ausführung mit einer Be- und Entladeseite, einer Transporteinrichtung zwischen den beiden Seiten und einer weiteren Objekterfassungseinrichtung über der Entnahmeseite. Der Transport von einer Seite zur anderen Seite kann beispielsweise folgendermaßen stattfinden:
Angetriebene Transporteinrichtung:
   - linear arbeitende Transporteinrichtung:
      Schieber, Shuttle, Schlitten, insbesondere angetrieben durch Linearantriebe wie beispielsweise einen Pneumatikzylinder
         Transportband
   - kreisförmig
      runder, segmentierter Tisch, Kreisspeicher
      Loop bzw. kreisförmiges Band
   - mehrere übereinander liegende Ebenen
      von unten nach oben
      von oben nach unten
Nicht angetriebene Transporteinrichtungen:
   - Schräge Ebene, auf welcher die Werkstücke herunterrutschen
Kombination aus den oben genannten angetriebenen und / oder nicht angetriebenen Transporteinrichtungen
Bevorzugt wird dabei während des Transportes das Werkstück in seiner Position verändert, um die Entnahmegenauigkeit zu erhöhen (ungenau ablegen, genau entnehmen). Das kann durch Endanschläge, Führungsleisten mit Anfasung, Federmechanismen etc. erreicht werden. Weiterhin kann die Zwischenstation auch als Umgreifplatz verwendet werden.

In Fig. 4a ist dabei eine alternative Ausgestaltung der Transporteinrichtung auf der Zwischenstation dargestellt, wie sie bei dem in Fig. 4 gezeigten Ausführungsbeispiel zum Einsatz kommen kann. Im oberen Bereich ist der erste Greifer 33 dargestellt, welcher die Werkstücke aus dem Behälter nimmt und im Ablagebereich 38 auf der Zwischenstation ablegt. Im unteren Bereich ist der zweite Greifer 40 dargestellt, welcher die Werkstücke im Entnahmebereich 44 entnimmt. Weiterhin ist die zweite Objekterfassungseinrichtung 42 dargestellt, welche im Bereich des Entnahmebereiches 44 angeordnet ist.

Als Transporteinrichtung ist dabei eine erste Transportplatte 301 vorgesehen, welcher über einen Linearantrieb 302 wie beispielsweise einen Pneumatikzylinder vom Ablegebereich 38 zum Entnahmebereich 44 verfahren werden kann und zurück. Zusätzlich ist eine zweite Transportplatte 303 vorgesehen, welche über den Linearantrieb 304 ebenfalls vom Ablegebereich 38 zum Entnahmebereich 44 und zurück verfahren werden kann. Die beiden Transportplatten und Linearantriebe können dabei identisch ausgeführt werden. Weiterhin können die beiden Transporteinrichtungen parallel zueinander angeordnet sein. Durch die Ausführung mit zwei Transportplatten steht immer eine leere Transportplatte zum Beladen bzw. eine befüllte Transportplatte zum Entladen zur Verfügung, so dass das System ohne Wartezeiten arbeiten kann.

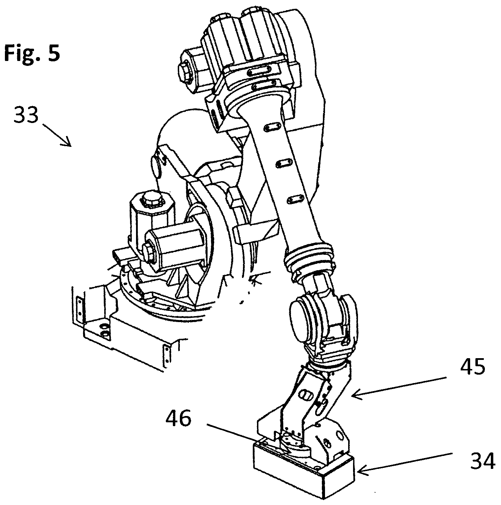

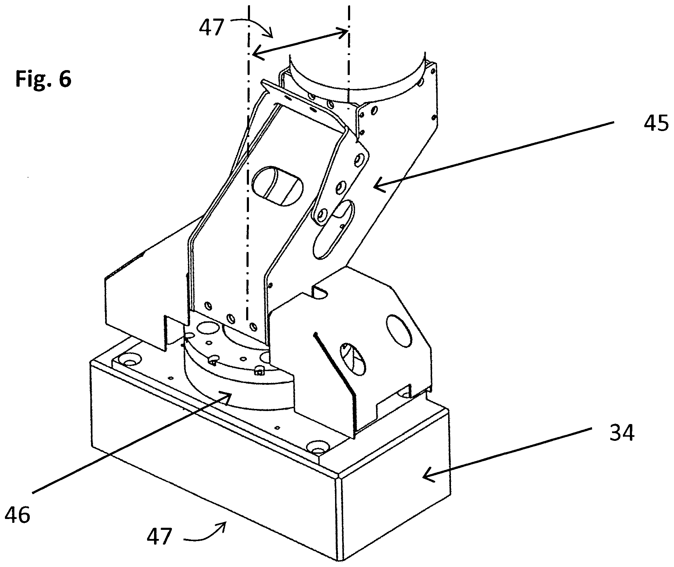

In den Figuren 5 und 6 ist nun nochmals ein Ausführungsbeispiel eines erfindungsgemäßen ersten Greifers gezeigt, wie er insbesondere zum Aufnehmen der Werkstücke aus einem Behälter eingesetzt werden kann. Dabei handelt es sich um einen Magnetgreifer 34. Dabei ist an der Unterseite des Greifers eine Magnetgreiffläche 47 vorgesehen. Der Magnetgreifer 34 weist dabei einen Elektromagneten auf, welcher an der Magnetgreiffläche 47 eine Magnetkraft zum Halten von magnetisierbaren Gegenständen erzeugt.

Der erfindungsgemäße Greifer ist gekröpft an dem Endglied des Greifarms angeordnet, bspw. am Endglied des Greifarms eines Roboters 33. Dabei ist eine Mittelachse des Greifers 34 bzw. der Magnetgreiffläche 47 versetzt um einen Abstand 48 zu einer Drehachse des letzten Dreh-Gelenkes des Greifarms angeordnet. Hierfür ist ein gekröpfter Arm 45 vorgesehen, welcher den Magnetgreifer 34 mit dem Greifarm verbindet. Durch die gekröpfte Ausführung des Magnetgreifers ist es möglich, diesen auch im Inneren eines Behälters direkt neben einer Seitenwand des Behälters zum Greifen von Werkstücken einzusetzen. Insbesondere wird so vermieden, dass Störkanten weiter oben am Greifarm ein Heranfahren des Magnetgreifers direkt an einen Wandbereich des Behälters verhindern.

Weiterhin kann eine Ausgleichseinheit 46 vorgesehen sein, wie sie im folgenden noch näher beschrieben wird. Diese verhindert, dass bei Kollision des Greifers 34 mit Störkanten oder mit Werkstücken eine Überlastung des Greifarmes erfolgt. Zudem wird verhindert, dass eine Sicherheitsausschaltung des Roboters aktiviert wird, welche nur manuell wieder überbrückbar wäre.

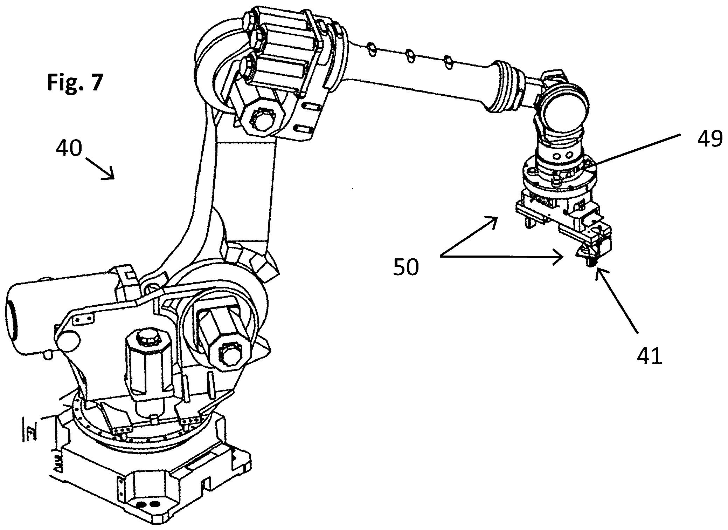

In Figur 7 ist ein Ausführungsbeispiel des zweiten Greifers 41 dargestellt, welcher ebenfalls an einem Greifarm eines Roboters 40 angeordnet ist. Als Greifer wird dabei im Ausführungsbeispiel ein Zweifingergreifer mit Fingern 50 eingesetzt, welche linear verfahrbar sind. Die Finger können dabei in Aussparungen des entsprechend geformten Werkstücks hinein gefahren und durch Auseinanderfahren oder Zusammenfahren das Werkstück greifen. Bei anders geformten Werkstücken können selbstverständlich auch andere mechanische Greifer zum Einsatz kommen, insbesondere Drei- oder Mehrfingergreifer oder Backengreifer. Auch bei dem in Figur 7 gezeigten Ausführungsbeispiel ist eine Ausgleichseinheit 49 vorgesehen, welche den Roboterarm bei Kollisionen vor Überlastung schützt.

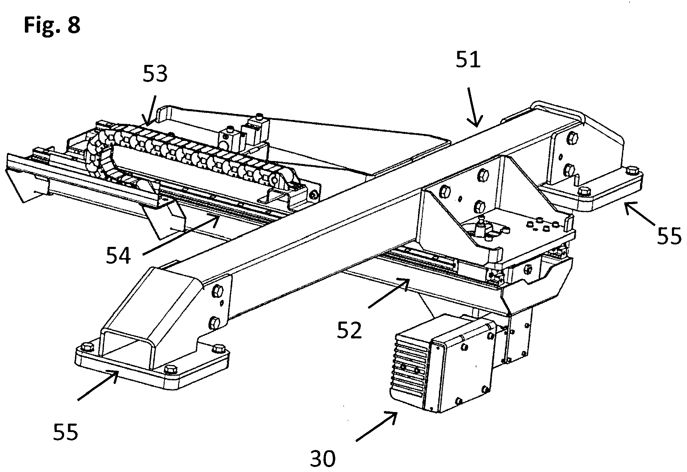

Figur 8 zeigt ein Ausführungsbeispiel einer erfindungsgemäßen Objekterkennungseinrichtung zur Erfassung von Werkstücken, welche durch eine Verfahranordnung von einer Ruheposition in eine Messposition verfahrbar ist und zurück.

Die in Figur 8 gezeigte Objekterkennungseinrichtung kann dabei insbesondere bei dem in Figur 4 gezeigten Ausführungsbeispiel als Objekterkennungseinrichtung 30 zum Erfassen der Werkstücke in einem Behälter eingesetzt werden. Die bei dem in Figur 4 gezeigten Ausführungsbeispiel zum Erfassen der Werkstücke auf der Zwischenstation eingesetzte zweite Objekterkennungseinrichtung 42 ist im Ausführungsbeispiel dagegen starr ausgeführt. Alternativ könnte jedoch auch diese Objekterkennungseinrichtung 42 eine Verfahranordnung aufweisen, um von einer Ruheposition in eine Messposition und zurück verfahrbar zu sein.

Die in Figur 8 gezeigte Objekterkennungseinrichtung weist einen Sensor 30 auf, welcher die Werkstücke erfasst. Der Sensor 30 ist an einem Sensorarm 52 angeordnet, welcher an einer Führungsschiene 54 verfahrbar angeordnet ist. Die Führungsschiene 54 ist wiederum an einem Montagebalken 51 angeordnet, um so über die Befestigungsstücke 55 auf einem Podest montiert werden zu können. Die genaue Anordnung der beiden Podestsäulen ist in Figur 4 erkennbar.

Bei dem in Figur 4 gezeigten Ausführungsbeispiel ist die Objekterkennungseinrichtung dabei so auf Podestsäulen angeordnet, dass die Behälter beim Einschleusen in eine Entnahmeposition zwischen den Podestsäulen hindurchgeführt werden können.

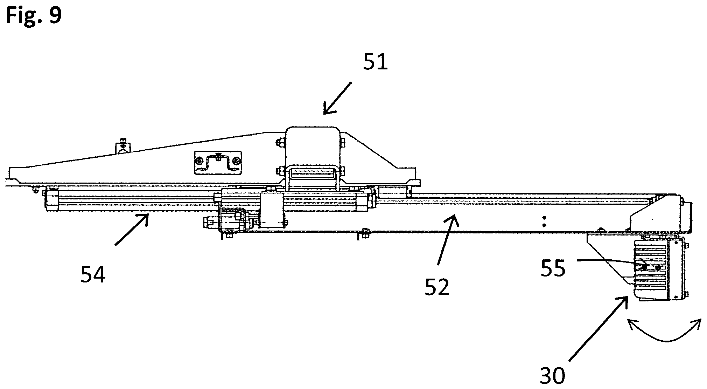

Wie in Figuren 8 und 9 erkennbar, kann der Sensor 30 durch Bewegen des Sensorarms 52 entlang der Führungsschiene 54 verfahren werden. Im Ausführungsbeispiel ist die Objekterkennungseinrichtung dabei so aufgebaut, dass der Sensor 30 in horizontaler Richtung verfahrbar ist.

In der Ruheposition befindet sich die Objekterkennungseinrichtung außerhalb eines Kollisionsbereiches mit dem ersten Greifer 34, so dass dieser freien Zugang zum Behälter hat. Zum Erfassen der Werkstücke im Behälter wird der Sensor 30 dann durch Ausfahren des Sensorarms 52 über den Behälter in die Messposition verfahren, in welcher die Erfassung der Werkstücke erfolgt. In seiner Messposition befindet sich der Sensor 30 in etwa mittig oberhalb des Behälters. Nach der Messung wird der Sensor wieder zurück in die Ruheposition gefahren, in welcher er außerhalb der Grundfläche des Behälters angeordnet ist.

Dabei sind die Bewegungen der Objekterkennungseinrichtung und des Entnahmegreifers 35 miteinander synchronisiert, so dass die Erfassung der Werkstücke in dem Behälter immer dann erfolgt, wenn der Greifer 34 ein Werkstück auf der Zwischenstation ablegt. Danach wird die Objekterkennungseinrichtung in die Ruheposition zurück verfahren, sodass der Greifer 34 ein neues Werkstück aus dem Behälter entnehmen kann. Beim darauffolgenden Ablegen des Werkstücks auf der Zwischenstation erfolgt wiederum eine Messung.

Ein gleiches Vorgehen wäre dabei auch bei der zweiten Objekterkennungseinrichtung 42 und dem zweiten Greifer 41 denkbar.

Alternativ oder zusätzlich könnte die Objekterkennungseinrichtung auch in vertikaler Richtung verfahren werden. Zum einen könnte eine solche vertikale Verfahrbarkeit in gleicher Weise wie die horizontale Verfahrbarkeit eingesetzt werden, um den Sensor aus einem Kollisionsbereich mit dem Greifer herauszufahren, wenn dieser ein Werkstück aufnimmt, und wieder näher an die Werkstücke heranzufahren, um eine Erfassung durchzuführen. Zudem wäre es denkbar, die Objekterkennungseinrichtung bei sich leerendem Füllstand des Behälters in vertikaler Richtung nachzuführen, so dass die Objekterkennungseinrichtung bei der Messung immer in einem gleichbleibenden Abstandsbereich zu den am höchsten angeordneten Werkstücken im Behälter angeordnet ist. Hierdurch kann eine gleichbleibende Erfassungsqualität erreicht werden.

Im Ausführungsbeispiel kann als Sensor der Objekterkennungseinrichtung ein Laserscanner eingesetzt werden.. Der Scanner kann dabei mehrere Laserstrahlen mit geringem Abstand, aussenden, so dass ein Fächer von Laserstrahlen entsteht. Der durch die Laserstrahlen gebildete Fächer wird dann durch Verschwenken des Sensors über den Erfassungsbereich geschwenkt, wodurch eine räumliche Erfassung des Erfassungsbereiches erfolgt. Dabei wird durch Abstandsmessung mittels der Laserstrahlen geometrische Daten erstellt.

Eine Anordnung des Sensors in etwa mittig oberhalb des Behälters hat dabei den Vorteil, dass die Seitenwände des Behälters keine Schatten bilden. Die Verfahrbarkeit des Sensors ermöglicht es dabei, den Sensor in der Messposition in ausreichend geringen Abstand zu den vermessenden Werkstücken zu platzieren, und dennoch nicht in Konflikt mit dem Greifer bzw. den den Greifer bewegenden Greiferarm zu kommen. Dies ist insbesondere beim Erfassen der Werkstücke im Behälter von besonderer Bedeutung, da der Scanner zumindest dann, wenn er nicht vertikal verfahrbar ist, so niedrig über dem Behälter platziert werden muss, dass er auch bei einem fast geleerten Behälter noch mit ausreichender Genauigkeit die Werkstücke erfasst.

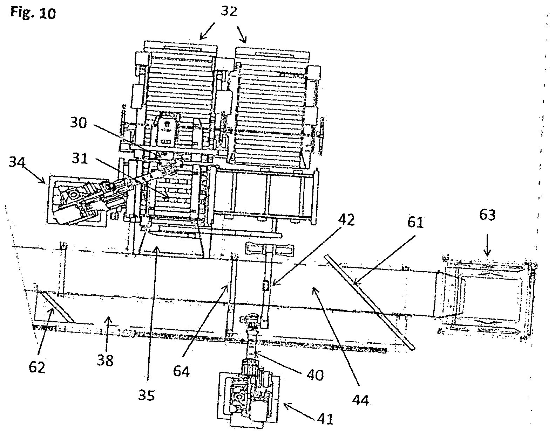

In Figur 10 ist ein weiteres Ausführungsbeispiel einer erfindungsgemäßen Vorrichtung zum automatisierten Entnehmen von Werkstücken aus einem Behälter gezeigt, welches auf dem in Figur 4 gezeigten Ausführungsbeispiel basiert und bei welchem die in Figur 4 lediglich schematisch angedeutete umlaufende Transportstrecke der Zwischenstation vorgesehen ist. Bis auf die unterschiedlich ausgeführte Zwischenstation entsprechen dabei alle Komponenten dem in Figur 4 gezeigten Ausführungsbeispiel, sodass im Hinblick auf den Gesamtaufbau der Vorrichtung auf die dortige Beschreibung verwiesen wird.

Die Zwischenstation weist auch bei dem in Figur 10 gezeigten Ausführungsbeispiel ein erstes Transportband 38 auf, welches die in einem Ablegebereich 35 abgelegten Werkstücke zu einem Entnahmebereich 44 transportiert. Dort werden die Werkstücke durch die Objekterkennungseinrichtung 42 erfasst und durch den Greifer 41, welcher durch den Greifarm 40 bewegt wird, gegriffen und entnommen.

Erfindungsgemäß ist die in Figur 10 gezeigte Zwischenstation nun mit einer Rücklaufstrecke 60 ausgestattet, welche im Entnahmebereich 44 nicht entnommene Werkstücke umlaufen lässt. Die Rücklaufstrecke 60 ist dabei ebenfalls ein Transportband, welches neben dem ersten Transportband 38 angeordnet ist und in Gegenrichtung bewegt wird. Die Rücklaufstrecke 60 sorgt dabei dafür, dass im Entnahmebereich 44 nicht entnommene Werkstücke zurücktransportiert werden und wieder auf das erste Transportband 38 gelangen, so dass sie nochmals in den Entnahmebereich 44 gelangen, wo sie erneut erfasst und gegriffen werden können.

Liegt daher ein Werkstück bei seinem ersten Erfassen in einer solchen Position im Entnahmebereich 44, dass es nicht oder nur sehr schlecht gegriffen werden kann, so kann die Steuerung auf einen Greifversuch verzichten und das Werkstück umlaufen lassen. Die Umlaufstrecke ist dabei so aufgebaut, dass das Werkstück beim nächsten Umlauf höchstwahrscheinlich in einer anderen Position in den Entnahmebereich 44 gelangt, so dass eine hohe Wahrscheinlichkeit besteht, dass das Werkstück beim zweiten Versuch in einer besser zu greifenden Position liegt. In gleicher Weise kann auch mit Werkstücken verfahren werden, bei welchen ein erfolgloser Greifversuch durchgeführt wurde.

Der Entnahmebereich könnte bei dem in Fig. 10 gezeigten Ausführungsbeispiel auch im Bereich der Rücklaufstrecke angeordnet werden, ohne dass sich die Funktion der Zwischenstation ändern würde.

Da die Werkstücke ungeordnet auf den Transportbändern 38 und 60 liegen, ist die Wahrscheinlichkeit sehr hoch, dass sie beim Umlauf ihre Position verändern. Dies kann erfindungsgemäß noch durch weitere Maßnahmen unterstützt werden. So ist beispielsweise ein Anschlag 61 vorgesehen, welcher schräg über das erste Transportband 38 verläuft und die Werkstücke vom ersten Transportband 38 auf die Rücklaufstrecke 60 drängt. In gleiche Weise ist am Ende der Rücklaufstrecke 60 ein Anschlag 62 vorgesehen, welcher das Werkstück wieder zurück auf die erste Transportstrecke 38 befördert. Allein durch den Kontakt mit den Anschlägen und das Drängen auf das jeweils andere Band wird dabei eine Positionsänderung der Werkstücke bewirkt.

Weiterhin kann vorgesehen sein, dass die Werkstücke während des Umlaufes einen Höhenunterschied durchlaufen. Insbesondere kann dabei eine schräge Ebene oder eine Kante mit einem Höhenunterschied vorgesehen sein, über welche die Werkstücke gedrängt werden. Auch hierdurch wird eine Positionsänderung bewirkt. Gleichzeitig können so gegebenenfalls miteinander verhakte Werkstücke voneinander getrennt werden.

Vorteilhafterweise ist dabei in dem Übergangsbereich zwischen dem ersten Transportband 38 und der Rücklaufstrecke 60 eine schräge Ebene vorgesehen, welche die Werkstücke hinunterrutschen. Vorteilhafterweise verläuft dabei die erste Transportstrecke 38 in horizontaler Richtung, während die Rücklaufstrecke 60 schräg angeordnet ist, so dass sich zumindest in einem der beiden Endbereiche der beiden Transportstrecken ein Höhenunterschied ergibt.

Um zu verhindern, dass nicht greifbare Teile für unbegrenzte Zeit auf der Umlaufstrecke verbleiben, kann ein Aussonderungsmodus vorgesehen sein, in welchem unter bestimmten Bedingungen der Umlauf beendet und die Werkstücke in einen Sammelbehälter 63 entleert werden. Insbesondere kann hierfür der Anschlag 61 so bewegt werden, dass die Werkstücke über die erste Transportstrecke 38 bis zu deren Ende und in den dort aufgestellten Behälter 63 transportiert werden.

Insbesondere kann dabei ein Aussonderungsmodus vorgesehen sein, in welchem keine neuen Werkstücke durch den ersten Greifer auf die Zwischenstation gelegt werden. Sodann erfolgt bei allen auf der Zwischenstation befindlichen Werkstücken zumindest ein Greifversuch. Gegebenenfalls können dabei auch mehrere Umläufe durchgeführt werden. Die dann noch auf der Zwischenstation verbleibenden Werkstücke können dann in den Behälter 63 entleert werden. Daraufhin kann wiederum in den normalen Modus geschaltet werden.

Weiterhin kann der Aussonderungsmodus eingesetzt werden, um fälschlicherweise auf die Zwischenstation gelangte Werkstücke auszusondern. So kann der Aussonderungsmodus aktiviert werden, wenn auf der Zwischenstation ein Werkstück erfasst wurde, welches nicht die geforderten Werkstückkriterien erfüllt und daher nicht an einer Zielaufnahme positioniert werden soll.

Bei dem in Figur 10 dargestellten Ausführungsbeispiel einer Zwischenstation ist auch die bereits im Hinblick auf das Ausführungsbeispiel in Figur 4 beschriebene, dort jedoch nicht dargestellte Umorientierungseinrichtung 64 dargestellt. Hierbei handelt es sich um eine Klappe, welche über das erste Transportband 38 zwischen dem Ablegebereich und dem Entnahmebereich angeordnet ist. Die Klappe 64 soll dabei insbesondere auf ihrer Kante stehende Werkstücke umwerfen, um diese besser greifbar zu machen.

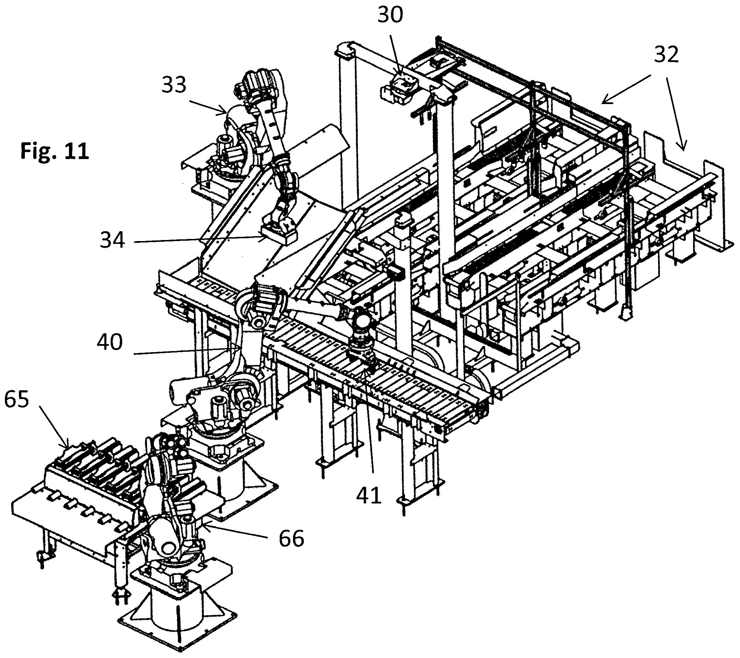

In Figur 11 ist ein weiteres Ausführungsbeispiel einer erfindungsgemäßen Vorrichtung zum automatisierten Entnehmen von in einem Behälter angeordneten Werkstücken gezeigt. Auch dieses Ausführungsbeispiel basiert auf dem in Figur 4 gezeigten Ausführungsbeispiel, so dass im Hinblick auf die Ausgestaltung zunächst auf die Beschreibung des in Figur 4 gezeigten Ausführungsbeispiels verwiesen wird.

Zum einen ist in Figur 11 auch die in Figur 4 lediglich schematisch gezeigte Ein- und Ausschleusung für Behälter mit Werkstücken gezeigt. Diese werden auf einer Seite abgestellt und von dort automatisiert in den Entnahmebereich 31 bewegt. Nun werden die Werkstücke durch den ersten Greifer 34 nacheinander entnommen, bis der Behälter zu 100 % entleert ist. Daraufhin wird der entleerte Behälter zur Ausschleusestrecke bewegt und von dort wieder ausgeschleust.

Vorteilhafterweise erfolgt dabei nach der Entnahme des letzten Werkstückes nochmals eine Sicherheitserfassung des Behälterinneren, um sicherzustellen, dass tatsächlich keine Werkstücke mehr im Behälter verblieben sind. Hat daher die Steuerung bei einem Erfassungsvorgang nur ein einziges Werkstück identifiziert, und wurde der Greifer entsprechend angesteuert, um dieses zu entnehmen, wird dennoch noch ein weiterer Erfassungsvorgang eingeleitet. Nur so kann sichergestellt werden, dass das zuletzt erfasste Werkstück auch tatsächlich entnommen wurde.

Weiterhin zeigt das in Figur 11 gezeigte Ausführungsbeispiel eine zweite Zwischenstation 65, auf welcher die von der ersten Zwischenstation durch den Greifer 41 entnommenen Werkstücke abgelegt werden, um erneut gegriffen zu werden. Das Ablegen auf der zweiten Zwischenstation erfolgt dabei in einer definierten Position, wobei das Ablegen dazu dient, beim Aufnehmen genauer greifen zu können und/oder die Ausrichtung des Werkstücks am Greifer verändern zu können. Weiterhin kann die zweite Zwischenstation auch als Pufferspeicher dienen.

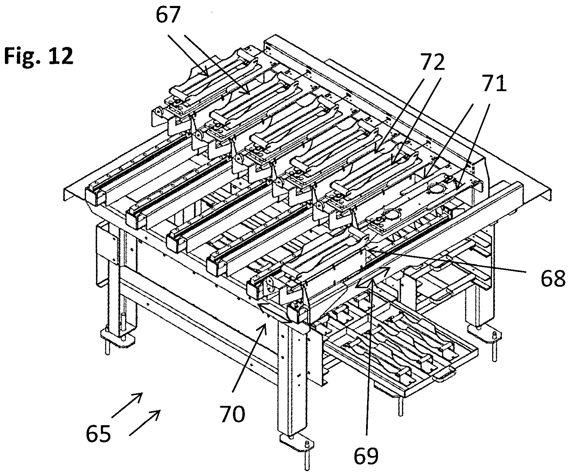

Ein Ausführungsbeispiel einer solchen Zwischenstation 65 ist in Figur 12 gezeigt. Die Zwischenstation weist mindestens eine Aufnahme 67 für die Werkstücke auf, in welche das Werkstück in einer definierten Position und Ausrichtung ablegbar ist. Im Ausführungsbeispiel sind dabei mehrere solche Aufnahmen 67 nebeneinander angeordnet, so dass die Zwischenstation auch als Pufferspeicher dient.

Die Aufnahmen 67 weisen eine Ausgleichsvorrichtung 70 auf, welche ein Ablegen der Werkstücke in der Aufnahme 67 auch mit einem gewissen Positionsversatz erlaubt, indem die Aufnahme durch den Kontakt mit dem abzulegenden Werkstück bewegt wird. Hierzu weist die Aufnahme 67 Aufnahmeschrägen 72 auf, gegen welche ein schlecht positioniertes Werkstück zuerst stößt und dabei eine Bewegung der Aufnahme hervorruft, durch welche das Werkstück in der Aufnahme ablegbar ist.

Die Aufnahme 67 erlaubt so ein Ablegen von Werkstücken in einem definierten Positionsbereich und erlaubt damit insbesondere auch das Ablegen von nicht exakt in einer Soll-Position gegriffenen Werkstücken.

Die Ausgleichseinheit 70 ist auf der Zwischenstation fixierbar, so dass die Aufnahme und damit das Werkstück zum Entnehmen in einer definierten Soll-Position angeordnet ist. Hierdurch kann das Entnehmen des Werkstückes mit einer größeren Genauigkeit erfolgen.

Die Aufnahmen 67 sind an der Zwischenstation auf Schienen 69 verschiebbar. Dabei können die Aufnahmen von einer Beladeposition, in welcher die Ausgleichseinheit eine Bewegung der Aufnahmen 67 erlaubt, in eine Entnahmeposition verschoben werden, in welcher die Ausgleichseinheit fixiert ist. Hierfür sind Anschläge 71 vorgesehen, in welche die Aufnahme 67 hineingefahren wird und welche die Aufnahme in einer definierten Position fixieren.

Das Ablegen und das Entnehmen von Werkstücken auf die zweite Zwischenstation 65 erfolgt dabei vorteilhafterweise jeweils durch mechanische Greifer, da diese eine relativ hohe Greifgenauigkeit aufweisen, durch welche die Werkstücke definiert in den Aufnahmen abgelegt und mit höherer Genauigkeit wieder aufgenommen werden können.

Das Greifen der Werkstücke auf der zweiten Zwischenstation erfolgt dabei ohne eine zuvorige Erfassung der Werkstücke, indem die Greifer an die bekannte Entnahmeposition der Aufnahme gefahren werden.

Weiterhin sind die Aufnahmen so ausgestaltet, dass die Werkstücke von zwei unterschiedlichen Richtungen aus gegriffen werden können. Im Ausführungsbeispiel weisen die Werkstücke dabei Ausnahmen aus, in welche die Finger eines Fingergreifers eingreifen. Die Aufnahmen sind dabei so gestaltet, dass die Ausnahmen in den Werkstücken von zwei Seiten zugänglich sind, wenn ein Werkstück in der Aufnahme angeordnet ist. Hierdurch kann die Ausrichtung des Werkstücks am Greifer umgekehrt werden, indem das Werkstück beim Ablegen von einer Seite gegriffen wird, beim Aufnehmen dagegen von der anderen Seite.

Dabei kann das Ablegen und das Aufnehmen durch den gleichen Greifer erfolgen. Bei dem in Figur 11 gezeigten Ausführungsbeispiel werden jedoch zwei separate Greifer eingesetzt.

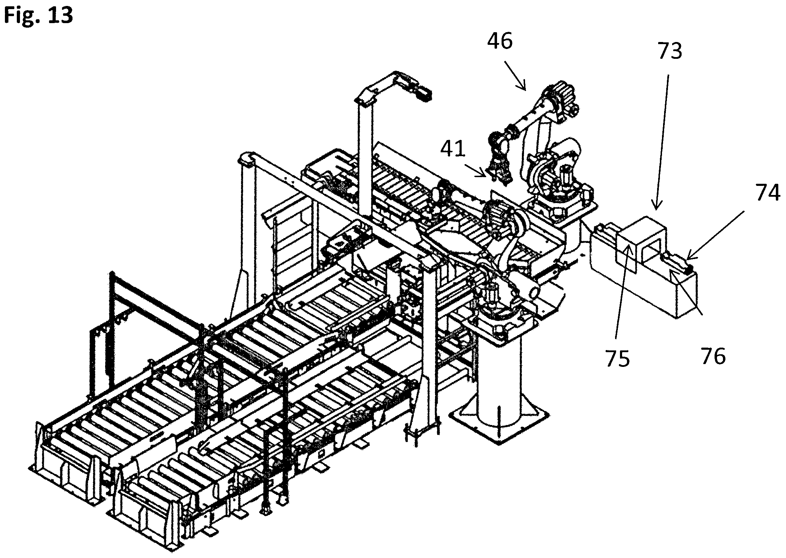

Bei dem in Figur 13 gezeigten Ausführungsbeispiel einer erfindungsgemäßen Vorrichtung, welche ebenfalls auf dem in Figur 4 gezeigten Ausführungsbeispiel beruht, ist nun ein weiteres Ausführungsbeispiel für eine zweite Zwischenstation 73 dargestellt. Auch diese Zwischenstation weist mindestens eine Aufnahme 74 auf, in welcher Werkstücke definiert abgelegt werden können. Die Aufnahme ist dabei genauso ausgestaltet wie die in Figur 12 gezeigten Aufnahmen.

Die in Figur 13 gezeigte Zwischenstation weist dabei ein Transportband auf, durch welches die auf dem Transportband zumindest in einem gewissen Umfang bewegliche Aufnahme 74 gegen Anschläge gefahren werden kann, um sie in ihrer Position zu fixieren. Auch hierdurch wird eine Ausgleicheinheit geschaffen, welche ein Ablegen der Werkstücke mit einem gewissen Versatz in der Aufnahme 74 erlaubt, und das Werkstück bzw. die Aufnahme zur Entnahme dennoch in eine definierte Position verfährt, so dass mit höherer Genauigkeit wieder gegriffen werden kann. Weiterhin kann auch hier von beiden Seiten gegriffen werden, um die Ausrichtung des Werkstücks am Greifer zu verändern.

Die in Figur 13 gezeigte Zwischenstation 73 ist weiterhin mit einer Funktionseinheit 75 ausgestattet, welche die Werkstücke auf der Zwischenstation durchlaufen. Bei der Funktionseinheit handelt es sich dabei um eine Entmagnetisierungsstation, durch welche die Werkstücke auf der Zwischenstation geführt werden.

Bei dem in Figur 13 gezeigten Ausführungsbeispiel wird dabei der gleiche mechanische Greifer 41 sowohl zum Ablegen der Werkstücke auf der Zwischenstation 73, als auch zum Entnehmen der Werkstücke eingesetzt.

Weiterhin kann bei einer Vorrichtung zur automatisierten Handhabung von Werkstücken gemäß der vorliegenden Erfindung eine Bestimmung der Greifgenauigkeit erfolgen. Insbesondere kann dabei bestimmt werden, ob und/oder wie stark die Position eines am Greifer aufgenommenen Werkstücks relativ zum Greifer von einer vorgegebenen Soll-Greifposition oder einem vorgegebenen Soll-Greifpositionsbereich abweicht. Vorteilhafterweise wird der Verfahrensablauf der Handhabung dann in Abhängigkeit von dem Ergebnis einer solchen Greifgenauigkeitsbestimmung angesteuert.

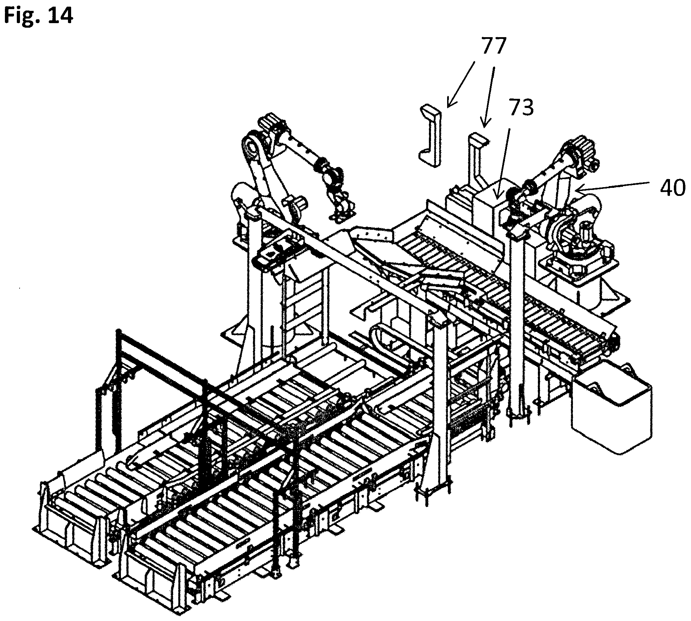

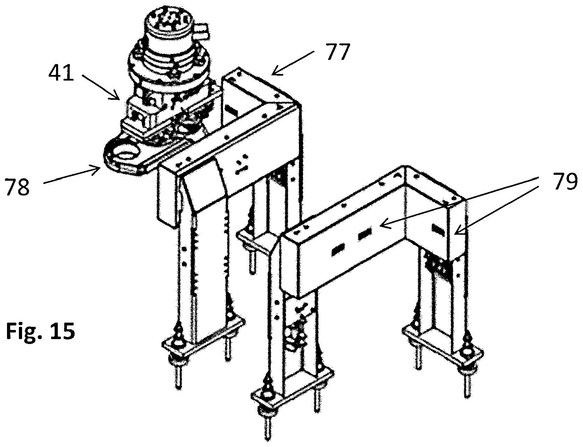

Dabei ist in den Figuren 14 und 15 ein Ausführungsbeispiel einer erfindungsgemäßen Vorrichtung dargestellt, bei welcher die Greifgenauigkeit durch Heranfahren des Greifers mit dem Werkstück an eine separate Messeinrichtung 77 bestimmt wird. Hierfür wird der Greifer 41, wenn er ein Werkstück 78 gegriffen hat, in eine definierte Position vor die Messeinrichtung 77 gefahren. Die Messeinrichtung 77 bestimmt dann die Position des Werkstückes 78, und kann so aus der bekannten Position des Greifers und der Position des Werkstücks die relative Position zwischen Werkstück und Greifer bestimmen. Hierdurch ist eine Bestimmung der Greifgenauigkeit bzw. der Position des Werkstücks am Greifer möglich.

Im Ausführungsbeispiel weist die separate Messeinrichtung 77 dabei Lasersensoren 79 auf. Im Ausführungsbeispiel wird dabei eine Dreipunktmessung durchgeführt.

Eine Bestimmung der Greifgenauigkeit kann insbesondere bei mechanischen Greifern von Vorteil sein, da diese zwar ein relativ exaktes Greifen der Werkstücke ermöglichen, jedoch auch hier Freiheitsgrade beim Greifen bestehen. Handelt es sich um einen Finger- oder Backengreifer, kann das Werkstück üblicherweise zumindest im Hinblick auf die Zustellrichtung des Greifers an das Werkstück in unterschiedlichen Positionen gegriffen werden. Beim Fingergreifer betrifft dies die Frage, wie weit die Finger in eine entsprechende Aufnahme am Werkstück eingreifen bzw. wie weit die Finger das Werkstück umgreifen.

Bei dem in Figur 14 gezeigten Ausführungsbeispiel einer erfindungsgemäßen Vorrichtung, welche auf den in Figur 4 gezeigten Ausführungsbeispiel basiert, wird dabei die Greifgenauigkeit des Greifers 41 bestimmt, welcher zum Entnehmen der Werkstücke von der ersten Zwischenstation eingesetzt wird. Alternativ könnte jedoch auch die Greifgenauigkeit beim Entnehmen eines Werkstücks von einer zweiten Zwischenstation bestimmt werden.

Alternativ zu der in Figuren 14 und 15 gezeigten separaten Messeinrichtung, an welche der Greifer herangefahren werden kann, kann auch ein am Greifer selbst angeordneter Sensor zur Bestimmung der Greifgenauigkeit eingesetzt werden. Ein Ausführungsbeispiel für einen solchen Sensor wird im folgenden noch näher beschrieben.

Das Ergebnis der Bestimmung der Greifgenauigkeit kann dabei in unterschiedlicher Art und Weise zur Ansteuerung der Vorrichtung herangezogen werden:
Zu einen ist es möglich, dass ein bei dieser Bestimmung erkannter Greiffehler beim Ablegen des Werkstückes durch eine entsprechende Ansteuerung des Greifers bzw. des diesen bewegenden Greifarmes ausgeglichen wird. Dies entspricht im Wesentlichen einer in Abhängigkeit von einer Abweichung des Werkstücks von einer Soll-Greifposition veränderten Nullpunktverstellung des Greifers beim Ablegen.

Weiterhin ist es denkbar, dass schlecht gegriffene Werkstücke wieder abgelegt werden, um erneut gegriffen zu werden. Insbesondere kann ein solches Vorgehen sinnvoll sein, wenn die Greifgenauigkeit außerhalb eines vorgegebenen Zulässigkeitsbereiches liegt.

Insbesondere kann dabei das Werkstück beim Greifen von einer Zwischenstation mit einem Transportband, wie sie beispielsweise in Figur 4 oder 14 dargestellt ist, zurück auf das Transportband gelegt werden, wenn die Greifgenauigkeit gewisse Kriterien unterschreitet. In vorteilhafter Weise wird das Werkstück dabei in einer Position auf das Transportband abgelegt, von welcher aus das Werkstück erneut in den Entnahmebereich gelangt. Vorteilhafterweise wird das Werkstück dabei erneut erfasst und dann anhand der hieraus ermittelten Daten erneut gegriffen. Dabei ist die Wahrscheinlichkeit hoch, dass das Werkstück nun mit ausreichender Genauigkeit gegriffen werden kann.

Dabei ist auch eine Kombination der beiden Vorgehensweisen denkbar. Liegt also die Genauigkeit außerhalb eines zulässigen Bereiches, so wird das Werkstück zurückgelegt. Ansonsten wird die ermittelte Abweichung von einer Soll-Griffposition beim Ablegen des Werkstückes durch eine entsprechende Bewegung des Greifers ausgeglichen.

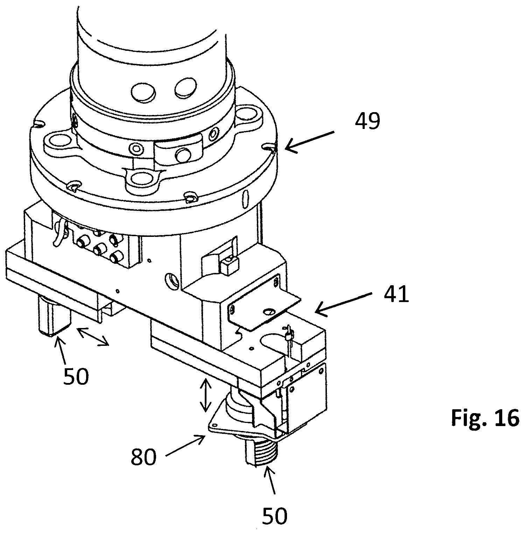

In Figur 16 ist ein Ausführungsbeispiel eines erfindungsgemäßen Greifers mit einem Stabilisatorelement dargestellt. Im Ausführungsbeispiel handelt es sich dabei um einen mechanischen Greifer, mit welchem das Werkstück gegriffen wird. Um Positionsänderungen des Werkstückes am Greifer zu verhindern, während der Greifer bewegt wird, wird das Stabilisatorelement 80 an das gegriffene Werkstück herangefahren. Das Stabilisatorelement 80 weist eine Stabilisatorplatte auf, an welcher Kontaktelemente zum Kontaktieren des Werkstückes vorgesehen sind. Die zusätzlichen Kontaktpunkte sorgen so für eine Lagefixierung des Werkstückes am Greifer.

Im Ausführungsbeispiel ist der Greifer als Zweifingergreifer mit den beiden Greiffingern 50 ausgeführt, welche in Ausnehmungen des Werkstückes zum Greifen eingeführt werden. Die durch die beiden Greiffinger 50 bereitgestellten zwei Kontaktpunkte fixieren das Werkstück jedoch nicht in einer eindeutigen Position zum Greifer, so dass erst die weiteren Kontaktpunkte des Stabilisierungselements eine definierte Lage des Werkstücks am Greifer herstellen. Vorteilhafterweise sind die Kontaktpunkte des Stabilisatorelementes dabei entfernt von einer die beiden Greiffinger 50 verbindenden Linie angeordnet.

Im Ausführungsbeispiel ist das Stabilisatorelement 80 im Bereich eines der beiden Greiffinger angeordnet und um diesen herum angebracht. Das Stabilisatorelement könnte jedoch auch in jeder anderen Position am Greifer angeordnet sein.

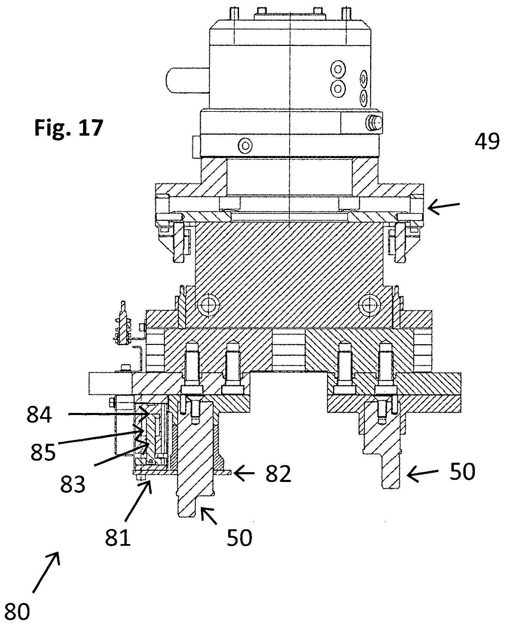

Der Aufbau des Stabilisatorelementes ist nochmals in der in Figur 17 dargestellten Schnittansicht zu erkennen. Dabei ist die Stabilisatorplatte 81 zu erkennen, an welcher beispielsweise im Bereich 82 Kontaktelemente angeordnet werden können. Die Stabilisatorplatte 81 umgibt den Greiffinger 50 dabei im Ausführungsbeispiel ring- bzw. hufeisenförmig.

Die Stabilisatorplatte 81 ist an einem Zylinder 83 angeordnet, durch welchen sie an das Werkstück herangefahren werden kann. Bei dem Zylinder 83 handelt es sich um einen Pneumatikzylinder. Durch Anlegen von Pneumatikdruck an der einen Seite des Zylinders kann so das Stabilisatorelement gegen das Werkstück gefahren oder bei Anlegen von Druck an der anderen Seite des Zylinders eingefahren werden.

Die Endanschläge 84 und 85 des Zylinders 83 sind mit Sensoren ausgestattet, welche erkennen, ob sich das Stabilisatorelement in einem seiner Endanschlagsbereiche befindet. Hierdurch ist eine Bestimmung der Greifgenauigkeit möglich, da die Ausfahrlänge des Stabilisatorelementes von der Position des gegriffenen Werkstückes am Greifer abhängt.

Befindet sich das Stabilisatorelement dabei im aktiven Zustand in einem seiner Endanschlagsbereiche, wird auf eine ungenügende Greifgenauigkeit geschlossen, da der Greifer dann entweder zu weit in das Werkstück hinein gefahren wurde oder nicht weit genug. Selbstverständlich könnte durch eine Messung der Ausschublänge des Zylinders 83 auch eine genauere Bestimmung der Greifgenauigkeit erfolgen.

Alternativ zu der in das Stabilisatorelement 82 integrierten Sensoranordnung zur Bestimmung der Greifgenauigkeit wäre auch ein separater Sensor denkbar, welcher am Greifer angeordnet ist. Beispielsweise könnte dabei ein am Greifer angeordneter Laser-Sensor eingesetzt werden, um die Greifgenauigkeit zu bestimmen.

In Figur 17 ist auch eine Ausgleichseinheit 49 zu sehen, über welche der Greifer an einem Greifarm befestigt ist.

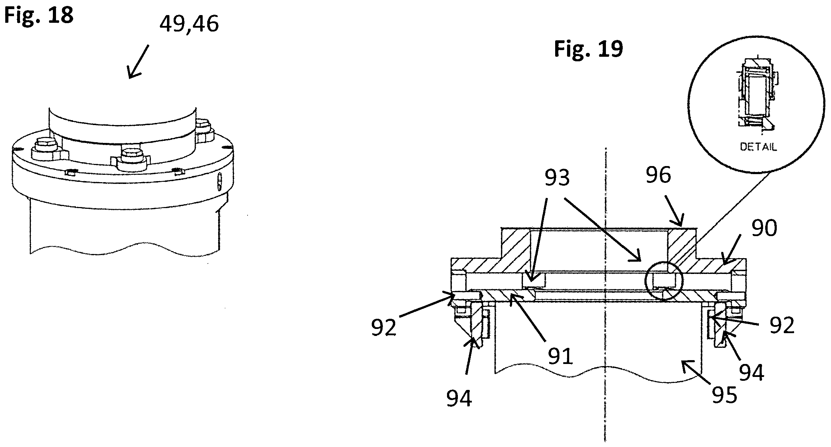

In Figuren 18 und 19 ist ein erstes Ausführungsbeispiel einer solchen Ausgleichseinheit näher dargestellt. Dabei ist ein Basiselement 90 vorgesehen, an welchem eine Ausgleichsplatte 91 angeordnet ist. Die Ausgleichsplatte 91 wird von Halteelementen 92 des Basiselementes 90 umgriffen. Zwischen Basiselement 90 und Ausgleichsplatte 91 ist eine Federanordnung 93 angeordnet, welche die Ausgleichsplatte 91 an die Haltebereiche 92 presst. Im Ausführungsbeispiel sind dabei mehrere Spiralfedern vorgesehen, welche in entsprechenden Federhülsen angeordnet sind. Jedoch sind auch beliebige andere Ausführungen einer solchen Federanordnung denkbar.

Die Federkraft der Federanordnung ist dabei so gewählt, dass die Ausgleichsplatte 91 im Normalbetrieb des Greifers starr an der Basiseinheit 90 gehalten ist. Erst im Falle einer Kollision des Greifers bzw. des darin angeordneten Werkstückes mit einer Störkante oder einem anderen Werkstück erlaubt die Federanordnung 93 eine Relativbewegung zwischen Ausgleichsplatte 91 und Basiselement 90. Hierdurch werden die auf den Greifarm ausgeübten Kräfte begrenzt. Insbesondere kann so verhindert werden, dass die Notausschaltung eines zum Bewegen des Greifers eingesetzten Roboters oder Flächenportals eingreift.

Die Kraft der Federanordnung 93 ist dabei einstellbar, so dass das Ausgleichselement an den entsprechenden Einsatzzweck angepasst werden kann. Die Einstellung der Federkraft kann dabei insbesondere dadurch erfolgen, dass der Greifer zusammen mit einem aufgenommenen Werkstück in eine 90°-Position zur Vertikalen verfahren wird, so dass die statische Belastung durch den Greifer und das Werkstück auf die Ausgleichseinheit maximal sind. In dieser Position wird die Vorspannung der Federanordnung 93 so eingestellt, dass keine Auslenkung der Ausgleichseinheit erfolgt. Hierdurch wird sichergestellt, dass unabhängig von der Ausrichtung des Greifers keine Auslenkung der Ausgleichseinheit allein durch die statischen Kräfte erfolgt, welche durch den Greifer und ein aufgenommenes Werkstück auf die Ausgleichseinheit aufgebracht werden. Gegebenenfalls kann die Vorspannung der Federanordnung 93 dabei noch um einen bestimmten Wert erhöht werden, um auch dynamische Belastungen beispielsweise beim Beschleunigen des Greifers bzw. des Greiferarmes zu berücksichtigen.

Die Vorspannung der Federanordnung 93 muss jedoch so gewählt werden, dass die Ausgleichseinheit auslöst, bevor die Notabschaltung des Greiferarmes eingreift.

Das erste Ausführungsbeispiel einer erfindungsgemäßen Ausgleichseinheit kann dabei bspw. zusammen mit einem mechanischen Greifer eingesetzt werden. Insbesondere kann das erste Ausführungsbeispiel einer erfindungsgemäßen Ausgleichseinheit dabei für den zweiten Greifer eingesetzt werden, welcher die Werkstücke von der Zwischenstation aufnimmt. Weiterhin kann das erste Ausführungsbeispiel der erfindungsgemäßen Ausgleichseinheit auch mit dem dritten Greifer eingesetzt werden, welcher die Werkstücke von der zweiten Zwischenstation abnimmt.

Das erste Ausführungsbeispiel der erfindungsgemäßen Ausgleichseinheit hat dabei eine sphärische Arbeitsweise, und erlaubt insbesondere Kipp-Ausgleichsbewegungen. Vorteilhafterweise erlaubt die Ausgleichseinheit dabei einen maximalen Ausgleichswinkel zwischen 2° und 10°, insbesondere zwischen 4° und 6°.

Dabei sind weiterhin Führungselemente vorgesehen, welche eine Verdrehung der Ausgleichsplatte 91 gegenüber dem Basiselement 90 verhindern. Im Ausführungsbeispiel greifen hierfür Führungsstifte seitlich in entsprechende Aussparungen der Ausgleichsplatte 91 ein.

Die Ausgleichsplatte ist dabei im Ausführungsbeispiel rund und weist abgerundete Kanten auf, um eine Verschwenkbewegung um beliebige Achsen zu ermöglichen.

Weiterhin sind Auflagesensoren 94 im Bereich der Haltebereiche 92 angeordnet. Diese überwachen, ob die Ausgleichsplatte 91 auf den Haltebereichen aufliegt oder ausgelenkt wurde. Hierdurch können Kollisionen des Greifers erfasst werden. Bei den Sensoren 94 handelt es sich dabei im Ausführungsbeispiel um induktive Sensoren. Im Ausführungsbeispiel sind dabei mehrere Sensoren vorgesehen, so dass Informationen über die Richtung der Auslenkung der Ausgleichsplatte 91 gewonnen werden können. Insbesondere sind dabei vier Sensoren vorgesehen.

Die von den Sensoren gewonnenen Daten können dabei wie folgt zur Ansteuerung des Greifers herangezogen werden: Im Normalbetrieb lenkt die Ausgleichseinheit nicht aus, so dass der Greifer eine definierte Position gegenüber dem Greifarm einnimmt, welche von der Ausgleichseinheit unbeeinflusst bleibt. Bei einer Kollision lenkt die Ausgleichseinheit jedoch aus, was durch die Sensoren 94 erkannt wird.

In diesem Fall erlaubt die Steuerung noch einen gewissen Verstellweg des Greifarms, welcher jedoch kleiner ist als der Ausgleichsweg der Ausgleichseinheit.

Überschreitet die Bewegung des Greifarms jedoch diesen zulässigen Verstellweg nach dem Erkennen einer Kollision, wird der Greifvorgang abgebrochen und der Greifer zurück in eine Nullposition verfahren. Daraufhin wird ein Greifvorgang erneut gestartet, indem zunächst die Werkstücke erfasst und dann eine neue Greifbewegung eingeleitet wird. Die Ausgleichseinheit schützt dabei vor einer Notausschaltung des Roboters, welche nur manuell wieder aufgehoben werden könnte.

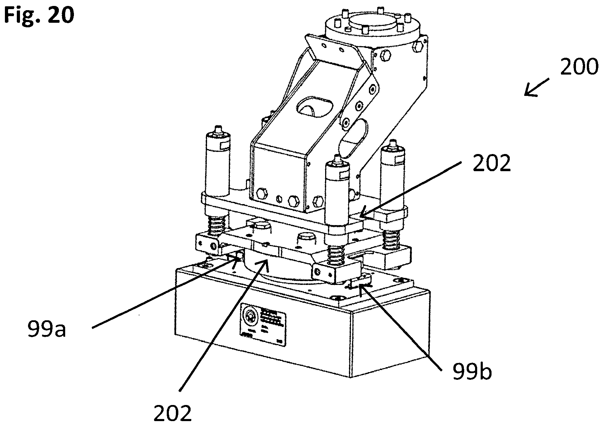

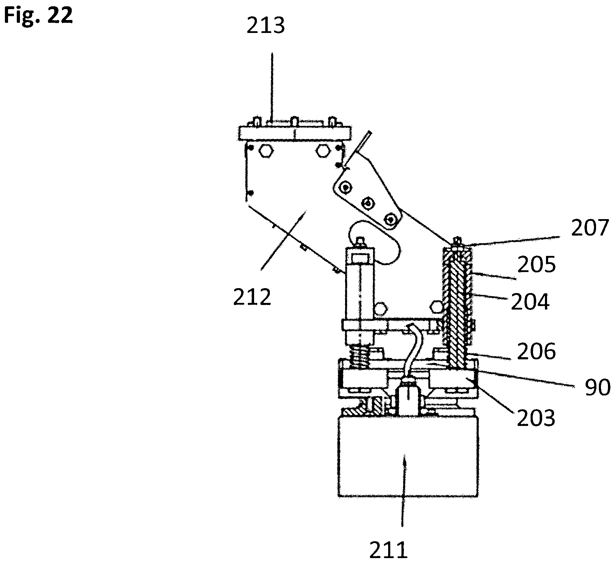

In Fig. 20 bis 22 ist ein zweites Ausführungsbeispiel einer erfindungsgemäßen Ausgleichseinheit gezeigt. Diese Ausgleichseinheit kombiniert eine Ausgleichseinheit mit sphärischer Wirkungsweise, wie sie in Fig. 18 und 19 dargestellt ist, mit einer Ausgleichseinheit mit linearer Wirkungsweise, um so den Ausgleichsweg zu erhöhen.

Die gesamte Ausgleichseinheit 200 umfasst dabei zunächst den sphärischen Ausgleichsteil 201, welcher im Aufbau im Wesentlichen dem ersten Ausführungsbeispiel einer Ausgleichseinheit entspricht, und kombiniert diesen in Serie mit einem zweiten Ausgleichsteil 202, welcher eine lineare Wirkungsweise hat.

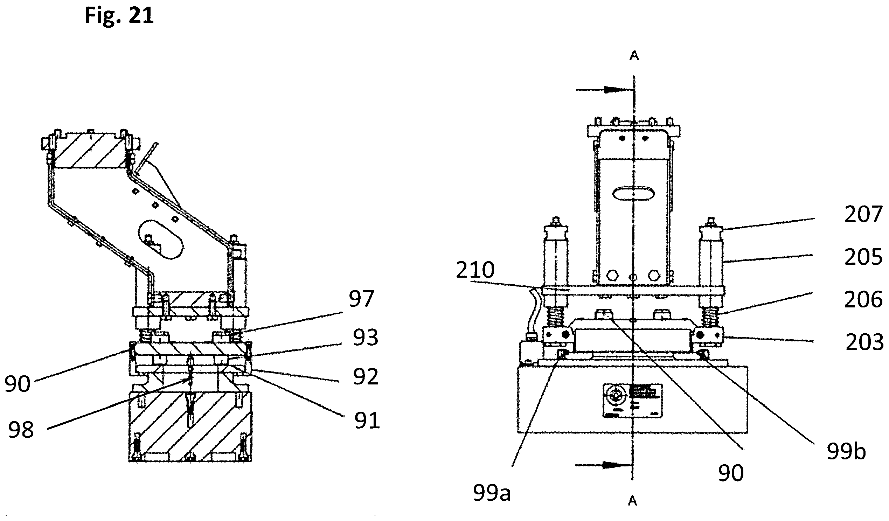

Wie in Fig. 21 insbesondere im Schnitt gut zu erkennen, weist der sphärisch wirkende Ausgleichsteil 201 den gleichen mechanischen Aufbau auf wie das erste Ausführungsbeispiel einer erfindungsgemäßen Ausgleichseinheit, wobei hierfür auch die gleichen Bezugszeichen verwendet wurden. Insbesondere ist dabei ein Basiselement 90 vorgesehen, an welchem die Ausgleichsplatte 91 angeordnet und von Halteelementen 92 des Basiselements 90 umgriffen wird. Zwischen Basiselement 90 und Ausgleichsplatte 91 ist eine Federanordnung 93 angeordnet, welche die Ausgleichsplatte 91 gegen die Haltebereiche 92 presst. Dabei sind Verstellelemente 97 gezeigt, über welche die Vorspannung der Federanordnung 93 verändert werden kann.

Der Aufbau des sphärisch wirkenden Ausgleichsteils 201 unterscheidet sich von dem ersten Ausführungsbeispiel einer erfindungsgemäßen Ausgleichseinheit lediglich im Hinblick auf den Sensor, welcher zum Detektieren einer Ausgleichsbewegung eingesetzt wird. Anders als im ersten Ausführungsbeispiel wird dabei eine Lichtschranke mit einem Sender 99a und einem Empfänger 99b eingesetzt, dessen Lichtweg durch eine Bohrung 98 durch die Ausgleichsplatte 91 verläuft. Wird die Ausgleichsplatte 91 dabei ausgelenkt, so unterbricht sie den Lichtweg der Lichtschranke.

Der Sensor erkennt damit erfindungsgemäß die Ausgleichsbewegung des sphärisch wirkenden Ausgleichsteils 201. Für den linear wirkenden Ausgleichsteil 202 ist dagegen kein Sensor vorgesehen.

Der linear wirksame Ausgleichsteil 202 ist dabei zwischen dem Basiselement 90 und dem Greifarm angeordnet. Dabei sind in den Eckbereichen des Basiselementes 90 Befestigungsbereiche 203 vorgesehen, an welchen Stangen 204 angeordnet sind. Die Stangen 204 sind linear verschieblich in Führungen 205 geführt, welche an einer Platte 210 angeordnet sind. Die Platte 210 ist dann wiederum mit dem Ende des Greifarmes verbunden. Die Bewegung der Stangen 204 in den Führungen 205 erfolgt gegen die Vorspannung einer Federanordnung 206, welche über Verstellelemente 207 einstellbar ist.

Die zweistufige Ausgleichseinheit gemäß der vorliegenden Erfindung ist im Ausführungsbeispiel mit einem Magnetgreifer 211 kombiniert, und über eine gekröpfte Greifarmverlängerung 212 an einem Greifarm, insbesondere an einem Roboterarm ankuppelbar. Hierfür weist die Greifarmverlängerung 212 eine Ankuppelfläche 213 auf, mit welchem sie am letzten Drehgelenk eines Roboterarms ankuppelbar ist.

Die beiden Ausgleichsteile 201 und 202 der Ausgleichseinheit sind dabei so ausgelegt, dass zunächst die sphärisch wirkende Ausgleichseinheit 201 auslenkt, und erst dann die linear wirkende Ausgleichseinheit 202. Die linear arbeitende Ausgleichseinheit 202 kann dabei einen Ausgleichsweg zwischen 1,5 und 5cm aufweisen, bevorzugt zwischen 2 und 3cm. Dieser Ausgleichsweg erlaubt es, die Bewegung des Greifers bei einer Kollision rechtzeitig zu Bremsen, bevor der gesamte Ausgleichsweg der Ausgleichseinheit ausgenutzt wurde.

Die Vorspannung der Federeinheiten des zweiten Ausführungsbeispiels einer Ausgleichseinheit könnten in gleicher Weise eingestellt werden, wie die Federspannung beim ersten Ausführungsbeispiel eines erfindungsgemäßen Ausgleichselements. Insbesondere könnte dabei die Vorspannung der Federeinheit 93 so eingestellt werden, dass sie auch bei einem um 90° zur Seite geschwenkten Greifer die statischen Lasten aus dem Greifer und einem angehängten Werkstück aufnimmt, ohne dass die Ausgleichseinheit auslenkt. Die Vorspannung der Federeinheit 206 des linearen Teils der Ausgleichseinheit würde dann entsprechend größer eingestellt. Hierbei muss jedoch berücksichtigt werden, dass die Vorspannungen der beiden Teile der Ausgleichseinheit so eingestellt werden müssen, dass die Ausgleichseinheiten noch unterhalb der maximalen Belastungsgrenze des Roboterarms auslenken. Dies ist insbesondere bei sehr schweren Greifern oder sehr schweren Werkstücken, bei welchen bereits die statische Belastung nahe der Maximalbelastung des Greifarms liegt, schwierig zu verwirklichen.

Alternativ kann daher die Vorspannung des sphärischen Teils der Ausgleichseinheit so eingestellt werden, dass sie lediglich die statische Belastung durch den Magnetgreifer aufnimmt, wenn sich dieser in einer 90° zur Seite gerichteten Position befindet, bei einem angehängten Werkstück in dieser Position dagegen bereits auslenkt.

Die vorliegende Erfindung macht sich dabei zu Nutze, dass der Greifer mit aufgenommenem Werkstück gleich nach dem Aufnehmen in eine Verfahrstellung gefahren werden kann, in welcher die Greiffläche nach unten zeigt, so dass die statischen Belastungen durch den Greifer und das Werkstück von der Ausgleichseinheit aufgenommen werden, ohne dass diese ausgelenkt würde. Eine schräge Ausrichtung des Greifers ist dagegen nur beim Heranfahren an das Werkstück notwendig, um die Greiffläche des Greifers mit der Hauptfläche oder den Angriffspunkten des Werkstücks in Deckung zu bringen.

Vorteilhafterweise fährt dabei der Greifer in einer Richtung senkrecht zu seiner Greiffläche an das Werkstück heran, greift dieses, und wird dann in Gegenrichtung zusammen mit dem Werkstück wieder zurückgefahren. Dabei wird das Signal des Sensors der Ausgleichseinheit für eine gewisse Wegstrecke beim Zurückfahren nicht beachtet, um eine Auslenkung der Ausgleichseinheit allein durch die statische Belastung durch das angehängte Werkstück und / oder dynamische Belastungen durch das Anfahren des Greifarms nicht fälschlicher Weise als Kollision zu werten. Während dieser Wegstrecke wird gleichzeitig der Greifer in eine Verfahrposition verfahren, in welcher die Greiffläche und damit das Werkzeug vertikal nach unten zeigen und damit nicht gegen die Federelemente der Ausgleichseinheit wirken.

Ist der Greifer um eine gewisse Strecke zurückgefahren und wurde er in die Verfahrposition geschwenkt, wird das Signal des Sensors der Ausgleichseinheit wieder dazu genutzt, um Kollisionen des Greifers bzw. des Werkstückes mit Störkanten zu detektieren.

Beim Heranfahren des Greifers an ein Werkstück kann das Signal des Sensors der Ausgleichseinheit zudem dazu genutzt werden, um den Kontakt des Greifers mit dem Werkstück zu detektieren. Der Greifer wird dabei langsam an das Werkstück herangefahren, bis die Ausgleichseinheit auslenkt.

Unabhängig von der genauen Ausführung der Ausgleichseinheit kann dabei gemäß der vorliegenden Erfindung je nachdem, in welchem Bereich sich der Greifer befindet, mit unterschiedlichen Verfahrgeschwindigkeiten für den Greifarm gearbeitet werden. In einem Bereich, in welchem sich der Greifer außerhalb des Behälters befindet und damit keine Kollision mit Störkanten zu befürchten ist, kann der Greifarm dabei im Eilgang bewegt werden, d.h. mit einer hohen Geschwindigkeit. Befindet sich der Greifer dagegen im Bereich des Behälters, so dass mit Kollisionen gerechnet werden muss, arbeitet er bevorzugt mit einer zweiten, niedrigeren Geschwindigkeit. Die Geschwindigkeit ist dabei so gewählt, dass der Greifer bei einer Kollision mit einer Störkante gestoppt werden kann, bevor der Ausgleichsweg der Ausgleichseinheit komplett aufgebraucht ist und die Ausgleichseinheit keine weitere Ausgleichsbewegung zulässt. Im Nahbereich zu dem aufzunehmenden Werkstück wird der Greifer weiterhin bevorzugt mit einer dritten, noch niedrigeren Geschwindigkeit verfahren. Dies erlaubt bei der Detektion einer Kollision noch einen gewissen Verfahrweg des Greifers bzw. Greifarms, bevor dessen Bewegung gestoppt werden muss.

Ausführungsbeispiele der Verfahren gemäß der vorliegenden Erfindung sollen nun noch einmal anhand von Ablaufschemata näher dargestellt werden. Diese können bevorzugt unter Verwendung von Vorrichtungen durchgeführt werden, wie sie oben beschrieben wurden.

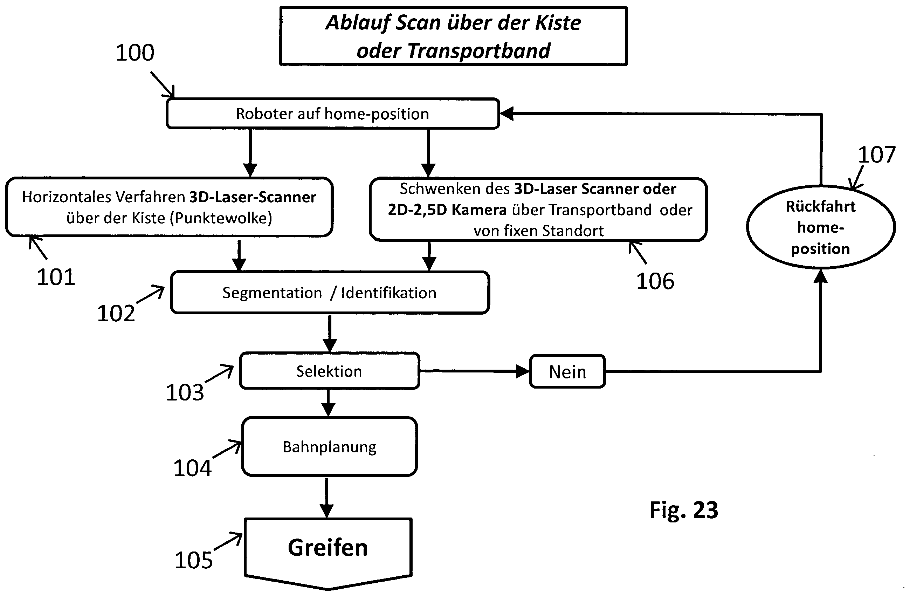

Figur 23 zeigt dabei den Ablauf des Erfassens der Werkstücke in einem Ausführungsbeispiel der vorliegenden Erfindung, und zwar sowohl für den Fall, dass ungeordnet in einem Behälter angeordnete Werkstücke erfasst werden, als auch ungeordnet auf einer Zwischenstation angeordnete Werkstücke erfasst werden.

In Schritt 100 befindet sich das System in einem Ausgangszustand. Insbesondere kann der Greifer zum Greifen der Werkstücke in diesem Ausgangszustand außerhalb des Erfassungsbereiches angeordnet sein. Der Greifer kann hierfür entweder in einer Parkposition abgestellt werden, oder in einem Bereich außerhalb des Erfassungsbereiches Tätigkeiten ausführen, wie beispielsweise ein bereits gegriffenes Werkstück ablegen.

Nun erfolgt in Schritt 101 bzw. 106 eine Messung durch die Sensoren der Objekterkennungseinrichtung. Hierfür kann im Ausführungsbeispiel insbesondere ein 3D-Laser-Scanner eingesetzt werden. Bei dem im Ausführungsbeispiel zum Erfassen der Werkstücke im Behälter eingesetzten 3D-Laser-Scanner wird dieser zunächst in eine Messposition über dem Behälter verfahren, von wo aus der Scanner über den Erfassungsbereich geschwenkt wird. Alternativ wäre auch ein Erfassen während der horizontalen Verfahrbewegung des 3D-Laser-Scanners möglich. Bei dem Erfassen der Werkstücke auf der Zwischenstation gemäß Schritt 106 ist der Sensor dagegen fest installiert, wobei er durch Schwenken über den Erfassungsbereich geschwenkt wird.

Alternativ zum Einsatz eines 3D-Laser-Scanners könnte auch ein Kamerasystem oder eine Kombination aus einem Kamerasystem und einem Laser-Scanner zum Einsatz kommen. Insbesondere kommt dabei auch eine 2D- oder 2,5D-Erfassung mittels einer Kamera in Frage.

In Schritt 102 werden nun die Daten ausgewertet und die Werkstücke identifiziert. Die identifizierten Werkstücke werden im Hinblick auf ihre Lage zueinander ausgewertet. Insbesondere wird dabei ermittelt, welche Werkstücke am höchsten liegen und welche Werkstücke durch andere Werkstücke zumindest teilweise abgedeckt sind. Hierdurch wird eine Selektion für die Entscheidung, welches Teil sich zum Greifen eignet, vorbereitet.

Im Schritt 103 wird nun eine Entscheidung getroffen, welches Teil im nächsten Schritt gegriffen werden soll. Ist dies anhand der vorhandenen Daten nicht möglich, so kann in einem neuen Zyklus nochmals eine Erfassung vorgenommen werden, wofür das System in Schritt 107 zurück in den Ausgangszustand 100 fährt.

Wurde dagegen ein Werkstück ausgewählt, so erfolgt in Schritt 104 eine Bahnplanung für den Greifer. Die ermittelten Parameter des zu greifenden Teiles, welche die Lage und Raumanordnung des Teiles beschreiben, werden als Basis für die Bahnplanung herangezogen. Das System kennt dabei seinen aktuellen Standort und die Zielkoordinaten. Der Weg, die sogenannte Bahn, kann dann mit Hilfe der ermittelten Raumdaten berechnet werden.

Vorteilhafterweise erfolgt dabei auch eine Kollisionsidentifikation, bei welcher der Greifer sowie der Behälter durch geometrische Daten dargestellt und die geplante Bahn simuliert wird, um so eventuelle Kollisionen vorab zu ermitteln und bei der Bahnplanung durch Ermittlung eines Alternativweges auszuschließen.

Anhand der so berechneten Daten erfolgt dann in Schritt 105 das Ansteuern des Greifers und das Greifen eines Werkstückes.

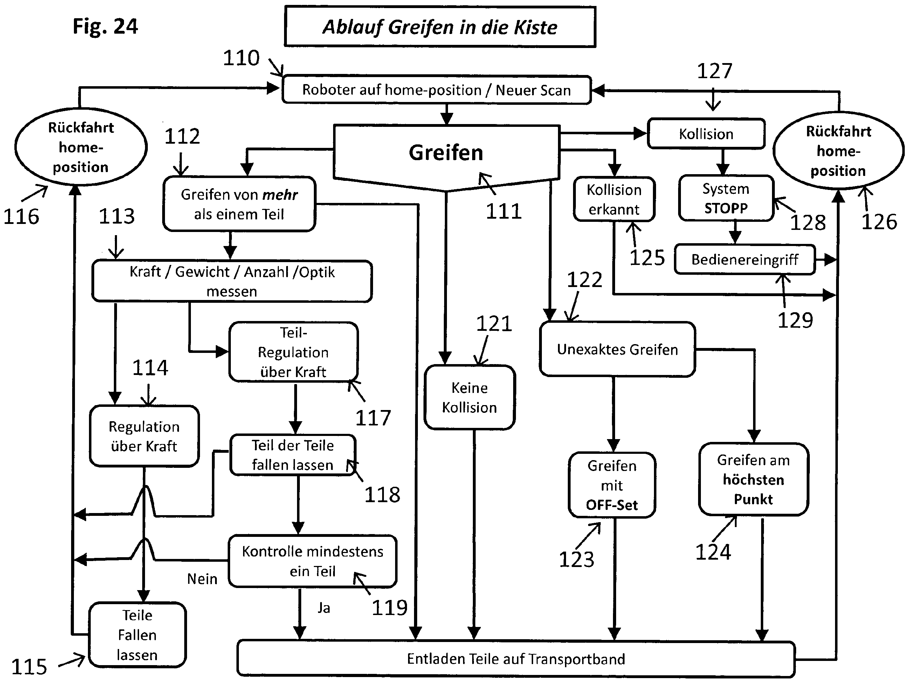

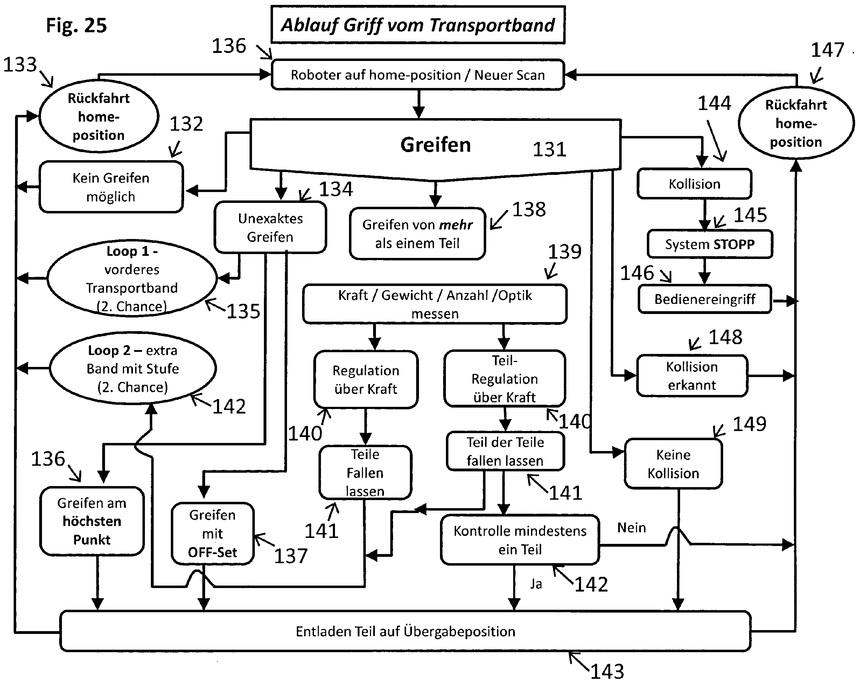

Bevor nun anhand von Figuren 24 und 25 die unterschiedlichen Greifstrategien gemäß der vorliegenden Erfindung nebeneinander dargestellt werden, sollen noch einmal überblicksmäßig die Möglichkeiten zum Aufbau einer erfindungsgemäßen Vorrichtung, durch welche die entsprechenden Strategien umgesetzt werden können, dargestellt werden:
Eine Vorrichtung gemäß der vorliegenden Erfindung kann zwei Greifer umfassen. Ein erster Greifer wird eingesetzt, um die Teile aus der Kiste grob zu greifen. Ein zweiter Greifer ist für das präzise Greifen und Vereinzeln auf einer Zwischenstation, welche insbesondere mit einem Transportband ausgerüstet sein kann, vorgesehen. Der zweite Greifer legt die Werkstücke auf eine weitere Zwischenstation oder auf eine Zielaufnahme für eine Mess- oder Arbeitsbehandlung der Werkstücke. Welcher Typ Greifer zum Einsatz kommt, hängt von der Geometrie, dem Aufbau, der Größe und/oder dem Gewicht der zu greifenden Werkstücke ab, und/oder von der Anzahl von Greifzonen und der Geometrie und dem Aufbau der Greifzone.

Die Werkstücke können jedoch ggf. miteinander verhaken, übereinander liegen oder auch stecken bleiben. Sie können Greifzonen besitzen, die für ein gezieltes Greifen aus der Kiste nicht ausreichen, da sie in gewissen Positionen, welche sie in der Kiste mit mehreren Teilen einnehmen können, nicht ausreichend zugänglich sind. Besitzen die Teile dabei eventuell nur eine bestimmte Greifzone, so stellt sich ein gezieltes direktes Greifen mit einem mechanischen Greifer als nicht ausreichend zuverlässig dar, und ist zudem langsam und störanfällig.

In einem bevorzugten Fall handelt es sich bei dem ersten Greifer daher um einen Magnetgreifer, und bei dem zweiten Greifer um einen mechanischen Greifer.

Die Verwendung eines Magnetgreifers für den Griff in die Kiste bzw. den Behälter hat den Vorteil, dass kein exaktes Greifen in eine präzise Greifzone notwendig ist. Weiterhin ist bei einem Magnetgreifer üblicherweise ein Greifen an unterschiedlichen Greifpunkten eines Werkstückes möglich. Insbesondere ist üblicherweise auch ein Greifen am höchsten Punkt des Werkstückes möglich. Weiterhin kann bei einem Magnetgreifen ein gleichzeitiges Greifen mehrerer Teile möglich sein, um diese auf der Zwischenstation abzulegen. Erfindungsgemäß ist so durch den Einsatz eines Magnetgreifers eine schnelle und hundertprozentige Entleerung der Kiste möglich.

Ein mechanischer Greifer hat den Vorteil, dass das Teil präzise in einer Greifzone greifbar ist, so dass das Werkstück anschließend in einer definierten Position einzeln auf oder in eine Aufnahmestation abgelegt werden kann. Bei der Aufnahmestation kann es sich dabei um die Aufnahmestation einer weiteren Zwischenstation handeln, oder um die Zielaufnahme einer Mess- oder Bearbeitungsstation. Ebenso kann das Werkstück auf einer Zwischenstation abgelegt werden, welche als Pufferstation oder Entmagnetisierungs- oder Vermessungsstation dient.

Der bevorzugte Fall einer Kombination aus einem magnetischen ersten Greifer und einem mechanischen zweiten Greifer kommt insbesondere bei Werkstücken mit einer lageorientierten Greifzone und/oder einer asymmetrischen, symmetrischen oder rotationssymmetrischen Kontur mit entsprechenden Größe und Gewicht zum Einsatz. Selbstverständlich kann ein magnetischer Greifer dabei nur dann eingesetzt werden, wenn das Werkstück von einem magnetischen Greifer gegriffen werden kann, also beispielsweise aus Metall besteht.

Dabei legt der Magnetgreifer die Werkstücke auf einer Zwischenstation ab, wo sie erneut erfasst werden, so dass sie nun gezielt durch den mechanischen Greifer gegriffen und dann auf eine Bearbeitungsstation, Messeinrichtung oder ein Transportband abgelegt werden können.

Folgende weitere Kombinationen für die Ausgestaltung von erstem und zweitem Greifer sind ebenfalls denkbar: mechanisch/mechanisch, pneumatisch/mechanisch, mechanisch/pneumatisch, pneumatisch/pneumatisch und magnetisch/pneumatisch. Auch beliebige andere Kombinationen mechanisch und/oder pneumatischer und/oder magnetischer Greifer sind denkbar.

Die Greifer können dabei jeweils entweder durch einen Roboterarm, oder ein Lindear- oder Flächenportal bewegt werden. Optional können die jeweiligen Greifer mit einer Ausgleichseinheit und/oder mit einem Kraftmomentensensor kombiniert werden, je nachdem, welche Strategien beim Greifen eingesetzt werden sollen. Die Ausgleichseinheit verbessert dabei die Systemsicherheit, indem sie bei Kollisionen die Notwendigkeit eines Bedienereingriffes verhindert.

Die Zwischenstation weist ein Transportband auf, welches die Werkstücke von dem Ablegebereich in einen Entnahmebereich transportiert. Dabei werden die abgelegten Teile über eine Werkstückrutsche zum Transportband befördert. Damit die durch den Magnetgreifer abgelegten Teile möglichst optimal auf dem Transportband zu liegen kommen, wird das Transportband durch schräge Bleche begrenzt, welche auf den Rand des Transportbandes rutschende Werkstücke zurück aufs Band rutschen lassen. Gleichzeitig kann noch eine von den Werkstücken bewegbare Klappe, insbesondere ein schwenkbares Blech oder ein Querbalken über dem Transportband installiert werden, damit übereinander liegende Teile noch vereinzelt werden bzw. nicht korrekt positionierte Teile umkippen. Hierdurch können die Werkstücke vom Scanner oder der Kamera besser erfasst werden und besser gegriffen werden.

Alternativ denkbar wäre ein Aufbau mit nur einem Greifer, der zuerst in den Behälter greift, das Werkstück auf einer Zwischenstation ablegt und dann zum Vereinzeln das Werkstück nochmals greift. Der erste Greifer würde damit auch zum Entnehmen des Werkstückes von der Zwischenstation und der Ablage auf einer weiteren Zwischenstation oder der Zielaufnahme eingesetzt werden.

Die Erfindung umfasst dabei folgende Verfahren, welche insbesondere beim Betrieb einer erfindungsgemäßen Vorrichtung durchgeführt werden können:

### Aussortieren von Werkstücken:

Wird der erste Greifer mit einem Kraftmomentensensor kombiniert, so kann an dieser Stelle bereits eine Selektion nach Gewicht der Werkstücke vorgenommen werden. Insbesondere können Werkstücke, welche außerhalb eines spezifischen Limits bezüglich des Gewichtes liegen, aussortiert werden. Insbesondere können diese in einen Aussortierungsbehälter aussortiert werden.

Ein Aussortieren durch den ersten Greifer ist auch dadurch möglich, dass Werkstücke, welche bei der Erfassung als außerhalb einer vorgegebenen Spezifikation liegend erkannt werden, aufgenommen und statt auf der Zwischenstation in einen Aussortierungsbehälter abgelegt werden.

Werkstücke, welche auf der Zwischenstation erfasst werden und welche außerhalb einer vorgegebenen Spezifikation liegen, können aussortiert werden. Insbesondere kann dies durch einen Weitertransport solcher Werkstücke in einen Aussortierungsbehälter am Ende des Transportbandes erfolgen.

Ebenso ist es denkbar, ein gerade gegriffenes Teil an eine Vermessungseinrichtung zu halten, wo z. B. Geometrien, Oberflächen (bspw. eine Lackierung) und/oder Markierungen (z.B. durch Codes) nachvermessen und/oder kontrolliert werden können. Zeigt diese Messung an, dass ein Teil in einer vorgegebenen Spezifikation liegt, so wird das gegriffene Teil normal abgelegt, bspw. auf der Zwischenstation oder einer Zielaufnahme. Liegt es außerhalb der Spezifikation, so wird es aussortiert.

### Verhinderung von Systemstopps:

Ein Systemstopp kann durch das Greifen mit einem Offset verhindert werden, bei welchem der Greifer die optimale Greifposition leicht verfehlt. In diesem Fall fährt der Greifer ca. 25 mm zurück und fährt erneut an, um dieses Mal präziser zu greifen.

Weiterhin kann über einen Kraftmomentensensor erkannt werden, wenn zu viele Teile auf einmal gegriffen wurden. Insbesondere wenn hierdurch die Maximalbelastung des Roboters überschritten werden könnte, kann die Belastung durch ein Abfallenlassen der Werkstücke zurück in den Behälter reduziert werden. Die am Greifer verbleibenden Teile können dann auf der Zwischenstation entladen werden.

Kommt es auf der Zwischenstation zu der Situation, dass die Objekterkennungseinrichtung das Teil nicht genau erfassen kann, da die Teile z. B. übereinander liegen und nicht genau erfasst werden können, oder dass ein Greifen nicht möglich ist oder nur mit unzureichender Genauigkeit erfolgt, können folgende Strategien eingesetzt werden:
Zum einen kann ein weiteres, tiefer liegendes Transportband eingesetzt werden, auf welchem die nicht gegriffenen Teile weiterfahren, um so die notwendige Position durch das Fallen über eine Stufe einzunehmen. Das Werkstück erhält so eine zweite Chance und wird wieder dem Transportband zum präzisen Greifen zugeführt (Loop 2). Hierbei kann, z. B. bei kleineren Teilen, die ineinander verhaken können, zudem vorgesehen sein, dass die umlaufend geführte Transportstrecke Vereinzelungseinrichtungen aufweist, welche die einzelnen Teile auseinanderzieht und hierdurch vereinzelt. Hierzu können beispielsweise Bleche oder Querbalken, die das Transportband verengen und/oder die Werkstücke streifen, eingesetzt werden.

Werden die Teile zwar gegriffen, kommt es jedoch zu keinem exakten Greifen, so kann dies über einen Sensor registriert werden. Hierzu kann beispielsweise ein Pneumatikzylinder am mechanischen Greifer vorgesehen sein. Dieser erkennt nicht nur die Greifposition innerhalb eines notwendigen Limits für eine anschließend genaue Ablage des Teiles, sondern hat auch eine Stabilisation des Teiles beim Greifen zur Folge. Bei einem erkannten nicht exakten Greifer kann der zweite Greifer das Werkstück zurück auf einen vorderen Teil des Transportbandes der Zwischenstation legen. Auch so erhält das Teil eine zweite Chance zum exakten Greifen (Loop 1).

Beim Greifen eines Werkstückes aus einem Behälter können die oben genannten Strategien insbesondere zu dem in Figur 24 dargestellten Ablauf kombiniert werden:
Dabei befindet sich das System in Schritt 110 in einem Grundzustand, in welchem dem Greifer die von der Bahnplanung berechnete Bahn vorgegeben wird. In Schritt 111 erfolgt dann der Versuch eines Greifens anhand der berechneten Bahnplanung.

Wird in Schritt 112 mehr als ein Werkstück gegriffen, so hängt das weitere Vorgehen davon ab, ob dies durch einen Sensor erkannt werden kann. Ist dies nicht der Fall, werden die Werkstücke schlicht auf dem Transportband entladen. Andernfalls ist es möglich, in Schritt 113 eine Messung im Hinblick auf Kraft, Gewicht, Anzahl oder Optik durchzuführen. Insbesondere kann hierbei ein Kraftmomentensensor eingesetzt werden. Alternativ kann hier auch ein 3D-Laser oder eine 2D- oder 2,5D-Kamera eingesetzt werden. Nun erfolgt durch Erkennung von vorgegebenen Grenzen eine Entscheidung, ob zu viele Teile aufgenommen wurden. Wenn zu viele Teile aufgegriffen wurden, kann entweder in Schritt 114 durch ein Ausschalten oder Reduzieren der Greifkraft des Greifers ein Fallenlassen sämtlicher Teile zurück in die Kiste erfolgen. Nach diesem Schritt 115 erfolgt ein komplett neuer Greifvorgang inklusive Erfassung der Teile. Alternativ kann in Schritt 117 eine Teilregulation durch teilweises Reduzieren der Kraft des Greifers und damit teilweises Fallenlassen der Werkstücke zurück in die Kiste erfolgen. Im Schritt 119 kann dabei nochmals überprüft werden, ob mindestens ein Teil anhängt. Wenn ein solches Teil anhängt, kann dieses in Schritt 120 auf der Zwischenstation abgeladen werden. Hängt kein Teil an, kann direkt mit einem neuen Greifzyklus begonnen werden.

Wird bei der Messung dagegen direkt erkannt, dass nur ein Teil anhängt, kann dieses direkt entladen werden. Wird bei der Messung erkannt, dass überhaupt kein Teil aufgenommen wurde, kann direkt mit einem neuen Greifzyklus begonnen werden.

In Schritt 122 ist dargestellt, wie vorgegangen werden kann, wenn ein zentriertes Greifen nicht möglich ist. In diesem Fall sucht sich der Greifer entweder den höchsten Punkt des ausgewählten Teiles und greift in Schritt 124 nochmals an diesen Punkt, oder er greift in Schritt 123 mit einem Offset, d. h. er fährt ca. 25 mm vom Teil zurück und fährt erneut das Teil an.

Alternativ kann eine solche Entscheidung bereits erfolgen, wenn bei der Auswahl des zu greifenden Werkstückes erkannt wird, dass keines der Werkstücke zentriert greifbar ist. In diesem Fall kann bereits bei der Bahnplanung ein Greifen mit einem Offset geplant werden, bei welchem sich Greiffläche und Hauptfläche des Werkstückes nicht komplett überlappen, oder ein Greifen am höchsten Punkt.

Das System kann dabei wie folgt mit Kollisionen umgehen: Erfolgt wie in Schritt 121 keine Kollision, so können die Werkstücke auf der Zwischenstation abgeladen werden. Wird dagegen in Schritt 125 eine Kollision beispielsweise durch ein Kraftmomentensensor und/oder eine Ausgleichseinheit erkannt, so erlaubt die Steuerung noch einen definierten Verfahrweg. Wird auch diese überschritten, wird der Greifvorgang abgebrochen und das System beginnt mit einem neuen Greifzyklus. Wird die Kollision in Schritt 127 dagegen erst durch die Notausfunktion des Roboters erkannt, führt dies in Schritt 128 zu einem Systemstopp, welcher erst durch einen Bedienereingriff 129 wieder aufgehoben werden kann.

Beim Greifen eines Werkstückes von der Zwischenstation, und insbesondere von dem Transportband der Zwischenstation, können die erfindungsgemäßen Strategien insbesondere zu dem in Figur 25 dargestellten Ablauf kombiniert werden:
Zunächst fährt in Schritt 130 ein Werkstück auf dem Transportband in den Erkennungsbereich der Objekterkennungseinrichtung und das Transportband hält an. Dann wird die Erkennung durchgeführt, insbesondere ein Scannen durch einen 3D-Laser-Scanner. Dieser kann schwenkbar, oder vertikal oder horizontal verfahrbar oder an einem fixierten Standpunkt über dem Transportband angeordnet sein. Alternativ kann eine Aufnahme eines Bildes über eine 2D-, 2,5D- oder 3D-Kamera erfolgen. Nach der Auswertung der Daten und der entsprechenden Bestimmung einer Bahn für den Greifer, wie sie bereits zuvor beschrieben wurde, erfolgt dann in Schritt 131 das Greifen.

Das Greifen von mehr als einem Teil in Schritt 138 kann die gleiche Vorgehensweise auslösen wie beim Greifen aus einem Behälter. Wird dabei ein mechanischer Greifer eingesetzt, bleibt jedoch lediglich die Möglichkeit, in Schritten 140 und 141 sämtliche Teile fallen zu lassen.

Auch das Vorgehen im Falle einer Kollision in Schritten 148 bzw. 144 ist identisch zu dem Vorgehen beim Greifen aus einem Behälter.

Bei einem unexakten Greifen in Schritt 143 kann ebenfalls so vorgegangen werden wie dies im Hinblick auf die entsprechenden Schritte in Figur 23 dargestellt wurde. Diese Strategien können insbesondere dann zum Einsatz kommen, wenn als zweiter Greifer ein Magnetgreifer zum Einsatz kommt.

Weiterhin kann dann, wenn die Greifgenauigkeit in Schritt 134 nicht ausreicht, das Teil erneut auf den vorderen Teil des Transportbandes abgelegt werden (Loop 1), so dass das Werkstück erneut erfasst und gegriffen werden kann.

Ist keine Erkennung möglich oder kann kein Werkstück gegriffen werden, dann kann das Werkstück bei einer entsprechenden Ausgestaltung der Zwischenstation über eine Rücklaufstrecke erneut auf das Transportband befördert werden, sodass eine erneute Chance zum Greifen besteht (Loop 2). Anderenfalls muss das nicht greifbare Werkstück in einen Aussortierbehälter verfahren werden.

Die vorliegende Erfindung ermöglicht durch die oben dargestellten Vorrichtungen und Verfahren eine Handhabung der Werkstücke mit schnellen Taktzeiten, kleinen Fehlerquoten und großer Genauigkeit beim Greifen. Hierbei ergibt sich eine hohe Prozesssicherheit durch die Vermeidung von Systemstillständen, welche einen Bedienereingriff erfordern würden. Weiterhin ermöglicht die vorliegende Erfindung eine 100 prozentige Entleerung der Behälter.

## Patentansprüche

1. Vorrichtung zum automatisierten Erfassen und Entnehmen von Werkstücken, mit einer Objekterkennungseinrichtung (30) zum Erfassen der Werkstücke und
einem Greifer (34) zum Greifen der Werkstücke,
und einer Steuerung zur Auswertung der Daten der Objekterkennungseinrichtung (30), zur Bahnplanung und zur Ansteuerung des Greifers (34),
wobei die Objekterkennungseinrichtung separat vom Greifer an der Vorrichtung montiert ist und nicht mit diesem mitbewegt wird,
wobei die Objekterkennungseinrichtung (30) an einer Verfahranordnung (54) angeordnet ist, durch welche sie aus einer Ruheposition in mindestens eine Messposition und zurück verfahrbar ist,
**dadurch gekennzeichnet,**
**dass** die Objekterkennungseinrichtung (30) sich in ihrer Ruheposition außerhalb eines Kollisionsbereichs mit dem Greifer (34) und in ihrer Messposition innerhalb eines Kollisionsbereichs mit dem Greifer (34) befindet.

2. Vorrichtung nach Anspruch 1, wobei die Objekterkennungseinrichtung (30) sich in ihrer Messposition oberhalb eines Entnahmebereichs der Werkstücke durch den Greifer (34) befindet.

3. Vorrichtung nach einem der vorangegangenen Ansprüche, wobei die Bewegung der Objekterkennungseinrichtung (30) mit der Entnahmebewegung des Greifers (34) synchronisiert angesteuert wird, wobei vorteilhafterweise die Objekterkennungseinrichtung während einer Ablegebewegung des Greifers in die Messposition gefahren wird und vor oder parallel zu einer Aufnahmebewegung des Greifers zum Greifen eines Werkstückes in die Ruheposition verfahren wird.

4. Vorrichtung nach einem der vorangegangenen Ansprüche, wobei die Bewegung der Objekterkennungseinrichtung (30) zumindest auch in horizontaler Richtung erfolgt.

5. Vorrichtung nach einem der vorangegangenen Ansprüche, wobei die Objekterkennungseinrichtung einen Sensor (30) umfasst, welcher zur Erfassung der Werkstücke in der Messposition der Objekterkennungseinrichtung verschwenkt wird, um den Entnahmebereich zu erfassen, wobei der Sensor in der Messposition vorteilhafterweise in etwa mittig oberhalb des Entnahmebereichs angeordnet ist.

6. Vorrichtung nach einem der vorangegangenen Ansprüche, wobei die Objekterkennungseinrichtung einen Lasersensor umfasst, insbesondere einen Laserscanner.

7. Vorrichtung nach einem der vorangegangenen Ansprüche, wobei die Bewegung der Objekterkennungseinrichtung (30) zumindest auch in vertikaler Richtung erfolgt.

8. Vorrichtung nach Anspruch 7, wobei die Objekterkennungseinrichtung (30) mit sinkendem Füllstand des Entnahmebereiches in vertikaler Richtung nachgeführt wird.

9. Vorrichtung nach einem der vorangegangenen Ansprüche, wobei die Objekterkennungseinrichtung einen Fotosensor umfasst, wobei vorteilhafterweise die Schärfeneinstellung des Sensors mit sinkendem Füllstand des Entnahmebereiches nachgestellt wird.

10. Vorrichtung nach einem der vorangegangenen Ansprüche, wobei die Objekterkennungseinrichtung (30) zum Erfassen der Werkstücke in einem Behälter vorgesehen ist oder wobei die Objekterkennungseinrichtung zum Erfassen der Werkstücke auf einer Zwischenstation vorgesehen ist, auf welche ein Greifer Werkstücke nach einem Entnehmen aus einem Behälter ablegt.

11. Vorrichtung nach einem der vorangegangenen Ansprüche, wobei die Objekterkennungseinrichtung (30) näher an einen Teilbereich des Erfassungsbereiches herangefahren wird, um dort befindliche Werkstücke genauer zu erfassen.

12. Verfahren zum automatisierten Erfassen und Entnehmen von Werkstücken, mit den Schritten
- Erfassen der Werkstücke mit einer Objekterkennungseinrichtung (30) und
- Greifen der Werkstücke mit einem Greifer (34),
wobei die Objekterkennungseinrichtung (30) nicht mit dem Greifer (34) mitbewegt wird, und wobei die Objekterkennungseinrichtung zum Erfassen der Werkstücke aus einer Ruheposition in mindestens eine Messposition und zum Greifen eines Werkstücks aus der Messposition in die Ruheposition verfahren wird,
**dadurch gekennzeichnet,**
**dass** die Objekterkennungseinrichtung (30) sich in ihrer Ruheposition außerhalb eines Kollisionsbereichs mit dem Greifer (34) und in ihrer Messposition innerhalb eines Kollisionsbereichs mit dem Greifer (34) befindet.

13. Verfahren nach Anspruch 12, welches unter Verwendung einer Vorrichtung nach einem der Ansprüche 1 bis 11 erfolgt.

14. Computerprogramm zur Durchführung eines Verfahrens nach Ansprüchen 12 oder 13, insbesondere Computerprogramm zur Implementierung einer Steuerung für eine Vorrichtung nach einem der Ansprüche 1 bis 11.

## Claims

1. An apparatus for the automated detection and removal of workpieces,
comprising an object recognition device (30) for detecting the workpieces; and
a gripper (34) for picking the workpieces;
and a control for evaluating the data of the object recognition device (30), for track planning and for controlling the gripper (34),
wherein the object recognition device is installed separately from the gripper at the apparatus and is not moved along with it,
wherein the object recognition device (30) is arranged at a travel arrangement (54) by which it can be traveled from a position of rest into at least one measuring position and back,
**characterized in that**
the object recognition device (30) is located in its position of rest outside a collision region with the gripper (34) and is located in its measuring position inside a collision region with the gripper (34).

2. An apparatus in accordance with claim 1, wherein the object recognition device (30) is located in its measuring position above a removal region of the workpieces by the gripper (34).

3. An apparatus in accordance with one of the preceding claims, wherein the movement of the object recognition device (30) is controlled in a synchronized manner with the removal movement of the gripper (34), with the object recognition device being advantageously traveled into the measuring position during a placing movement of the gripper and being traveled into the position of rest before or in parallel with a picking-up movement of the gripper for picking a workpiece.

4. An apparatus in accordance with one of the preceding claims, wherein the movement of the object recognition device (30) also takes place in at least the horizontal direction.

5. An apparatus in accordance with one of the preceding claims, wherein the object recognition device comprises a sensor (30) which is pivoted in the measuring position of the object recognition device for detecting the workpieces to detect the removal region, with the sensor advantageously being arranged approximately centrally above the removal region in the measuring position.

6. An apparatus in accordance with one of the preceding claims, wherein the object recognition device comprises a laser sensor, in particular a laser scanner.

7. An apparatus in accordance with one of the preceding claims, wherein the movement of the object recognition device (30) also takes place in at least the vertical direction.

8. An apparatus in accordance with claim 7, wherein the object recognition device (30) is tracked in the vertical direction with a falling filling level of the removal region.

9. An apparatus in accordance with one of the preceding claims, wherein the object recognition device comprises a photosensor, with the focusing of the sensor advantageously being tracked with a falling filling level of the removal region.

10. An apparatus in accordance with one of the preceding claims, wherein the object recognition device (30) is provided for detecting the workpieces in a container; or wherein the object recognition device is provided for detecting the workpieces on an intermediate station onto which a gripper places workpieces after a removal from a container.

11. An apparatus in accordance with one of the preceding claims, wherein the object recognition device (30) is traveled closer toward a part region of the detection region to detect workpieces located there more accurately.

12. A method for the automated detection and removal of workpieces comprising the steps
- detecting the workpieces with an object recognition device (30); and
- picking the workpieces using a gripper (34),
wherein the object recognition device (30) is not moved along with the gripper (34; and wherein die object recognition device is traveled from a position of rest into at least one measuring position for detecting the workpieces and is traveled from the measuring position into the position of rest for picking a workpiece,
**characterized in that**
the object recognition device (30) is located in its position of rest outside a collision region with the gripper (34) and is located in its measuring position inside a collision region with the gripper (34).

13. A method in accordance with claim 12 which takes place using an apparatus in accordance with one of the claims 1 to 11.

14. A computer program for carrying out a method in accordance with one of the claims 12 or 13, in particular a computer program for implementing a control for an apparatus in accordance with one of the claims 1 to 11.

## Revendications

1. Dispositif de détection et de prélèvement automatisés de pièces, comprenant un moyen de reconnaissance d'objets (30) destiné à la détection des pièces et
un préhenseur (34) destiné à la préhension des pièces,
et un dispositif de commande destiné à l'évaluation des données du moyen de reconnaissance d'objets (30), à la planification de la trajectoire et à la commande du préhenseur (34),
le moyen de reconnaissance d'objets étant monté sur le dispositif séparément du préhenseur et n'étant pas déplacé avec ce dernier,
le moyen de reconnaissance d'objets (30) étant disposé sur un agencement de déplacement (54), au moyen duquel il peut être déplacé depuis une position de repos dans au moins une position de mesure et vice-versa,
**caractérisé en ce que**
le moyen de reconnaissance d'objets (30) se trouve, dans sa position de repos, en dehors d'une zone de collision avec le préhenseur (34) et, dans sa position de mesure, à l'intérieur d'une zone de collision avec le préhenseur (34).

2. Dispositif selon la revendication 1, dans lequel le moyen de reconnaissance d'objets (30) se trouve, dans sa position de mesure, au-dessus d'une zone de prélèvement des pièces par le préhenseur (34).

3. Dispositif selon l'une des revendications précédentes, dans lequel le mouvement du moyen de reconnaissance d'objets (30) est commandé de manière synchronisée avec le mouvement de prélèvement du préhenseur (34), le moyen de reconnaissance d'objets étant, de manière avantageuse, déplacé dans la position de mesure pendant un mouvement de dépôt du préhenseur et déplacé dans la position de repos avant ou parallèlement à un mouvement de réception du préhenseur pour la préhension d'une pièce.

4. Dispositif selon l'une des revendications précédentes, dans lequel le mouvement du moyen de reconnaissance d'objets (30) se fait au moins également dans la direction horizontale.

5. Dispositif selon l'une des revendications précédentes, dans lequel le moyen de reconnaissance d'objets comprend un capteur (30), qui, pour la détection des pièces dans la position de mesure du moyen de reconnaissance d'objets, est pivoté pour détecter la zone de prélèvement, le capteur étant, dans la position de mesure, disposé de manière avantageuse approximativement dans une position centrale au-dessus de la zone de prélèvement.

6. Dispositif selon l'une des revendications précédentes, dans lequel le moyen de reconnaissance d'objets comprend un capteur laser, en particulier un scanner laser.

7. Dispositif selon l'une des revendications précédentes, dans lequel le mouvement du moyen de reconnaissance d'objets (30) se fait au moins également dans la direction verticale.

8. Dispositif selon la revendication 7, dans lequel le moyen de reconnaissance d'objets (30) est ajusté dans la direction verticale au fur et à mesure que le niveau de remplissage de la zone de prélèvement baisse.

9. Dispositif selon l'une des revendications précédentes, dans lequel le moyen de reconnaissance d'objets comprend un photodétecteur, le réglage de la netteté du détecteur étant, de manière avantageuse, ajusté au fur et à mesure que le niveau de remplissage de la zone de prélèvement baisse.

10. Dispositif selon l'une des revendications précédentes, dans lequel le moyen de reconnaissance d'objets (30) est prévu pour la détection des pièces dans un contenant ou dans lequel le moyen de reconnaissance d'objets est prévu pour la détection des pièces sur un poste intermédiaire, sur lequel un préhenseur dépose des pièces après un prélèvement dans un contenant.

11. Dispositif selon l'une des revendications précédentes, dans lequel le moyen de reconnaissance d'objets (30) est rapproché d'une zone partielle de la zone de détection pour détecter les pièces s'y trouvant de manière plus précise.

12. Procédé de détection et de prélèvement automatisés de pièces, comprenant les étapes consistant à
- détecter les pièces avec un moyen de reconnaissance d'objets (30) et
- prendre les pièces avec un préhenseur (34),
le moyen de reconnaissance d'objets (30) n'étant pas déplacé avec le préhenseur (34), et le moyen de reconnaissance d'objets étant déplacé pour la détection des pièces depuis une position de repos dans au moins une position de mesure et pour la préhension d'une pièce depuis la position de mesure dans la position de repos,
**caractérisé en ce que**
le moyen de reconnaissance d'objets (30) se trouve, dans sa position de repos, en dehors d'une zone de collision avec le préhenseur (34) et, dans sa position de mesure, à l'intérieur d'une zone de collision avec le préhenseur (34).

13. Procédé selon la revendication 12, qui est effectué au moyen d'un dispositif selon l'une des revendications 1 à 11.

14. Programme informatique destiné à l'exécution d'un procédé selon la revendication 12 ou 13, en particulier programme informatique destiné à la mise en oeuvre d'une commande pour un dispositif selon l'une des revendications 1 à 11.
